# EUROPEAN PATENT APPLICATION

(11) **EP 4 796 818 A1**
(43) Date of publication of application: **26.08.2026**
(21) Application number: 24890839.4
(22) Date of filing: 15.11.2024
(51) Int. Cl.: F16K 11/072, F16K 11/14, F16K 27/04

(54) **MULTI-WAY VALVE**

(30) Priority: 16.11.2023 CN 202311534488; 16.11.2023 CN 202323113128 U; 16.11.2023 CN 202323106240 U; 16.11.2023 CN 202323120425 U; 16.11.2023 CN 202323118213 U; 16.11.2023 CN 202323105758 U
(71) Applicant: Zhejiang Dunan Artificial Environment Co., Ltd., Shaoxing, Zhejiang 311835 (CN)
(72) Inventor: SHEN, Cancan, Shaoxing, Zhejiang 311835 (CN); CHEN, Yutao, Shaoxing, Zhejiang 311835 (CN); ZHOU, Xiaowei, Shaoxing, Zhejiang 311835 (CN)
(74) Representative: Novagraaf Technologies
(86) International application number: PCT/CN2024/132449
(87) International publication number: WO 2025/103487

(57) **Abstract**

Some embodiments of the disclosed a multi-way valve. The multi-way valve includes a valve housing and a valve core component arranged in the valve housing, the valve core component includes a first valve core, a second valve core, and an elastic support assembly arranged between the first valve core and the second valve core, the elastic support assembly is configured to support the first valve core, and the first valve core is limited between the valve housing and the elastic support assembly; and through an elastic force of the elastic support assembly, the second valve core is pressed against a bottom wall of a cavity of the valve housing. By using the solution, through the elastic support assembly, the first valve core is pressed while the second valve core is supported. The situation that the valve core is likely to move under an impact action of flowing fluid, causing failure of the valve core component is prevented. Stability and sealing performance of the valve core component are improved.

## Description

The present invention claims the benefit of priority to Patent Application No. 202311534488.1, filed with the China National Intellectual Property Administration on November 16, 2023 and entitled "Multi-way valve";
the present invention claims the benefit of priority to Patent Application No. 202323113128.2, filed with the China National Intellectual Property Administration on November 16, 2023 and entitled "Valve core component and multi-way valve";
the present invention claims the benefit of priority to Patent Application No. 202323106240.3, filed with the China National Intellectual Property Administration on November 16, 2023 and entitled "Valve core component and multi-way valve";
the present invention claims the benefit of priority to Patent Application No. 202323120425.X, filed with the China National Intellectual Property Administration on November 16, 2023 and entitled "Valve core component";
the present invention claims the benefit of priority to Patent Application No. 202323118213.8, filed with the China National Intellectual Property Administration on November 16, 2023 and entitled "Multi-way valve"; and
the present invention claims the benefit of priority to Patent Application No. 202323105758.5, filed with the China National Intellectual Property Administration on November 16, 2023 and entitled "Multi-way valve".

### Technical Field

The present invention relates to a technical field of multi-way valves, and particularly relates to a multi-way valve.

### Background

A valve core of a valve core component of a multi-way valve in the related art is generally arranged in a valve housing and configured to form a guide flow path. Openings at two ends of the guide flow path can be adjusted by rotating the valve core such that various operating conditions of the multi-way valve where the valve core component is located can be rapidly adjusted. However, the valve core of the valve core component in the prior art, when used, is likely to move under the influence of pressure of fluid entering the guide flow path, rendering mounting of the valve core unstable. Further, the guide flow path is likely to fail, affecting usage of the multi-way valve.

### Summary

Some embodiments of the present invention provide a multi-way valve, so as to solve the problem of unstable mounting of a valve core of a valve core component in the related art.

The present invention provides a multi-way valve. The multi-way valve includes a valve housing and a valve core component arranged in a cavity of the valve housing. The valve core component includes a first valve core, a second valve core, and an elastic support assembly arranged between the first valve core and the second valve core. The elastic support assembly is configured to support the first valve core. The first valve core is limited between the valve housing and the elastic support assembly. Through an elastic force of the elastic support assembly, the second valve core is pressed against a bottom wall of the cavity of the valve housing.

In some embodiments, the valve core component further includes a second valve core shaft connected with the valve housing. The elastic support assembly includes a metal sleeve and a second spring. The metal sleeve is fixedly sleeved on a periphery of the second valve core shaft. The second spring is sleeved on the periphery of the second valve core shaft. Two ends of the second spring respectively abut against the metal sleeve and a top wall of the second valve core. The first valve core is in stop-fit with one end of the metal sleeve facing away from the second spring.

In some embodiments, an end of the second valve core shaft is located at a center of the first valve core. An other end of the second valve core shaft is located at a center of the second valve core. The second valve core is rotated around the second valve core shaft. A gap is provided between the metal sleeve and the second valve core shaft.

In some embodiments, the valve core component further includes a pressing sheet and a sealing member which are sleeved on the second valve core shaft. The pressing sheet is fixedly connected with the second valve core shaft. The second spring is located between the pressing sheet and the metal sleeve. The sealing member is located between the pressing sheet and the second valve core.

In some embodiments, a bottom of the valve housing is provided with a limiting hole. The valve core component further includes a press-fitting member. The first valve core is located on a side of the second valve core facing away from the limiting hole. An end of the second valve core shaft is located in the limiting hole. At least part of the press-fitting member is arranged in the limiting hole and in push-fit with the second valve core shaft, so as to make the second valve core shaft press-fitted in the limiting hole and limit an upward movement of the second valve core shaft in an axial direction.

In some embodiments, the multi-way valve further includes a shaft sleeve embedded in the limiting hole through injection molding. An end of the second valve core shaft is located in the shaft sleeve. At least part of the press-fitting member is arranged in the shaft sleeve and in limit-fit with the second valve core shaft and the shaft sleeve. The press-fitting member is provided with an external thread. The shaft sleeve is provided with an internal thread. The press-fitting member is in threaded connection with the shaft sleeve.

In some embodiments, the valve core component further includes a press-fitting member and a sliding sheet. The sliding sheet is arranged in the valve housing. The second valve core is circumferentially rotated on a surface of the sliding sheet. The press-fitting member is connected with the valve housing. The sliding sheet is sandwiched between the press-fitting member and the valve housing.

In some embodiments, the press-fitting protrusion is provided with a first limiting inclined surface. The sliding sheet is provided with a through hole for the press-fitting member to pass through. A radial size of the through hole is gradually decreased in a direction close to the bottom of the valve housing. A second limiting inclined surface adapted to the first limiting inclined surface is formed. The first limiting inclined surface is in push-fit with the second limiting inclined surface.

In some embodiments, a bottom of the valve housing is further provided with a sealing groove and an opening of the sealing groove facing an interior of the cavity of the valve housing. The multi-way valve further includes a flow path sealing gasket arranged in the sealing groove. The sliding sheet is located on a top surface of the flow path sealing gasket.

In some embodiments, the valve housing is provided with a plurality of first flow ports, a plurality of second flow ports, and a plurality of first flow cavities. The plurality of first flow cavities are in communication with the plurality of first flow ports in a one-to-one correspondence manner. The first valve core is provided with a plurality of first flow passages. The first flow passages are in communication with first flow cavities corresponding to the first flow passages. Communication between the first flow ports is switched through rotation of the first valve core. The second valve core is provided with a plurality of second flow passages. The second flow passages are in communication with second flow cavities corresponding to the second flow passages. Communication between the second flow ports is switched through rotation of the second valve core. The second flow passages are not in communication with the first flow passages.

In some embodiments, a bottom wall of the valve housing is a bottom plate. The plurality of first flow ports are provided at an edge of the bottom plate. The plurality of the second flow ports are provided in a middle of the bottom plate. Side walls in a circumferential direction of the valve housing include an outer side wall and an inner side wall. The plurality of first flow cavities are formed between the outer side wall and the inner side wall; and the second valve core is located in the middle of the bottom plate. An end of the first valve core in an axial direction of the multi-way valve is located at a top of the second valve core. An other end of the first valve core in the axial direction of the multi-way valve abuts against a top of the valve housing. The first flow passage and two first flow cavities and two first flow ports which correspond to the first flow passage constitute a first flow path. The second flow passage and two second flow ports corresponding to the second flow passage constitute a second flow path. An Inlet and an outlet of the first flow passages are both located in a circumferential direction of the first valve core. The inner side wall is provided with openings opposite an inlet and an outlet in the circumferential direction of the first valve core. An Inlet and an outlet of the second flow passages are both located at one end of the second valve core facing the bottom plate.

In some embodiments, a cavity region delimited by the first valve core, the second valve core and the valve housing form a back pressure cavity. Fluid in the second valve core is not in communication with fluid in the back pressure cavity. Fluid in the first valve core is in communication with the fluid in the back pressure cavity.

In some embodiments, the multi-way valve further includes a valve core sealing gasket arranged around the first valve core. The valve core sealing gasket is arranged on a side wall of the cavity of the valve housing and in seal-fit with a periphery of the first valve core. The valve core sealing gasket is provided with a first opening penetrating a side wall of the valve core sealing gasket in an axial direction of the first valve core. The fluid in the first valve core is in communication with the fluid in the back pressure cavity through the first opening.

In some embodiments, the multi-way valve further includes a supporting seat. The supporting seat is arranged on the bottom wall of the cavity of the valve housing, and a part of the supporting seat is parallel to the side wall of the cavity of the valve housing. The supporting seat is sleeved on a periphery of the second valve core and supports the valve core sealing gasket. A cavity region delimited by the supporting seat, the first valve core, and the second valve core forms the back pressure cavity.

In some embodiments, the valve housing is provided with a plurality of first flow ports and a plurality of second flow ports. The first valve core is provided with a plurality of first flow passages. The first valve core is rotatably arranged in the cavity of the valve housing, so as to switch communication between the first flow ports. The second valve core is rotatably arranged in the cavity of the valve housing, to fully open, fully close, or partially close a second flow port opposite to the second valve core.

In some embodiments, the second valve core includes a valve sheet. The multi-way valve further includes a sliding sheet. The sliding sheet is arranged in the cavity of the valve housing. The sliding sheet is provided with third openings. The third openings correspond to the second flow ports in a one-to-one correspondence. The valve sheet is rotated on a surface of the sliding sheet and in seal-contact with the sliding sheet, to cause the valve sheet to fully open, fully close, or partially close a third opening corresponding to the valve sheet. The sliding sheet is further provided with a notch. The notch directly faces a bottom wall of the valve housing.

In some embodiments, the multi-way valve further includes a valve core seat located in the cavity of the valve housing. The valve sheet and the sliding sheet are located in the valve core seat. An inner wall of the valve core seat is provided with a groove and a stopping protrusion. The sliding sheet is located in the groove and abuts against two ends of the stopping protrusion. The valve sheet is rotated in the groove and abuts against the two ends of the stopping protrusion.

In some embodiments, the multi-way valve further includes an actuator. The actuator is in drive connection with the first valve core. In a case that the actuator drives the first valve core to rotate in a forward direction, the first valve core drives the second valve core to rotate together, and a flow operating condition of the multi-way valve is adjusted through an angle change of the first valve core and an angle change of the second valve core. In a case that the actuator drives the first valve core to rotate in a reverse direction, the first valve core is rotated independently, and the flow operating condition of the multi-way valve is adjusted through an angle change of the first valve core.

In some embodiments, the valve core component further includes a first transmission structure and a second transmission structure which fit with each other. The first transmission structure and the second transmission structure are arranged on the second valve core and the first valve core respectively. One of the first transmission structure and the second transmission structure includes a ratchet wheel. An other one includes a plurality of pawls. The plurality of pawls are distributed in a circumferential direction of the first valve core and fit with different ratchet teeth of the ratchet wheel. The first transmission structure and the second transmission structure constitute a ratchet mechanism the first transmission structure is arranged on one side of the second valve core facing the first valve core. The first transmission structure is provided with a ratchet groove. The ratchet groove is provided with a guide surface extending in a circumferential direction of the second valve core and a stop surface extending in an axial direction of the second valve core. Two ends of the guide surface are spaced apart from each other in the axial direction of the second valve core to form the stop surface. The second transmission structure abuts against the guide surface and moves in an extending direction of the guide surface. In a case that the actuator drives the first valve core to rotate in the forward direction, the second transmission structure is in push-fit with the stop surface.

In some embodiments, a plurality of ratchet grooves are provided. The plurality of ratchet grooves are distributed in the circumferential direction of the second valve core. A plurality of guide surfaces have a same inclination direction and a same inclination angle. One stop surface is connected between any two adjacent guide surfaces. Two ends of the stop surface in the axial direction of the second valve core shaft are connected with ends of the guide surfaces on two sides respectively. A plurality of second transmission structures are arranged. The plurality of second transmission structures are distributed in the circumferential direction of the first valve core and correspond to the different ratchet grooves.

In some embodiments, the second transmission structure includes a limiting member and an elastic member. The limiting member includes a pushing block, a fixed block and a connecting member. The fixed block is fixedly arranged at a bottom of the first valve core. One end of the pushing block rotatably penetrates the fixed block through the connecting member. The elastic member is an elastic sheet. The elastic sheet abuts against the bottom of the first valve core and the pushing block, so as to limit another end of the pushing block in the ratchet groove. A plurality of second transmission structures are arranged. The plurality of pushing blocks fit with the ratchet grooves at different locations respectively.

In some embodiments, the bottom of the first valve core and the pushing block are provided with mounting grooves for mounting the elastic sheet. The elastic sheet includes two sheet bodies connected to each other. An included angle is provided between the two sheet bodies. The two sheet bodies have an elastic tendency to rotate away from each other around a connection location. The two sheet bodies are in limit-fit with inner walls of the two mounting grooves respectively.

By applying the technical solution of the present invention, the multi-way valve includes a valve housing and a valve core component arranged in a cavity of the valve housing. The valve core component includes a first valve core, a second valve core and an elastic support assembly arranged between the first valve core and the second valve core. The elastic support assembly is configured to support the first valve core. The first valve core is limited between the valve housing and the elastic support assembly. Through an elastic force of the elastic support assembly, the second valve core is pressed against a bottom wall of a cavity of the valve housing.

By using the solution, through the elastic support assembly, the first valve core is pressed while the second valve core is supported. The first valve core and the second valve core can be favorably limited in an axial direction. The situation that in the prior art, the valve core is likely to move under an impact action of flowing fluid, causing failure of the valve core component is prevented. Stability and sealing performance of the valve core component are improved.

### Brief Description of the Drawings

Accompanying drawings of the description serve as a constituent part of the present invention to provide a further understanding of the present invention. Illustrative examples of the present invention and their descriptions serve to explain the present invention, but are not to be construed as unduly limiting the present invention. In the accompanying drawings,
Fig. 1 illustrates a schematic structural diagram of a multi-way valve according to Example 1 of the present invention;
Fig. 2 illustrates a sectional view of the multi-way valve in Fig. 1;
Fig. 3 illustrates a schematic structural diagram of a valve core component of the multi-way valve in Fig. 1;
Fig. 4 illustrates a schematic assembly diagram of a first valve core and a second transmission structure in Fig. 3;
Fig. 5 illustrates a schematic assembly diagram of a second valve core and a first transmission structure in Fig. 3;
Fig. 6 illustrates a schematic structural diagram of the second transmission structure in Fig. 3;
Fig. 7 illustrates a schematic assembly diagram of the first valve core and a valve core sealing gasket of the multi-way valve in Fig. 1;
Fig. 8 illustrates an enlarged view of location A in Fig. 2;
Fig. 9 illustrates an enlarged view of location B in Fig. 2;
Fig. 10 illustrates a schematic assembly diagram of a shaft sleeve and a press-fitting member of the multi-way valve in Fig. 1;
Fig. 11 illustrates a schematic structural diagram of the first valve core of the multi-way valve in Fig. 1;
Fig. 12 illustrates a schematic structural diagram of the first valve core of the multi-way valve in Fig. 1 from another angle of view;
Fig. 13 illustrates a sectional view of the first valve core of the multi-way valve in Fig. 1;
Fig. 14 illustrates a schematic structural diagram of an interior of the second valve core of the multi-way valve in Fig. 1;
Fig. 15 illustrates a bottom view of the multi-way valve in Fig. 1;
Fig. 16 illustrates a sectional view of a multi-way valve according to Example 2 of the present invention;
Fig. 17 illustrates a sectional view of the multi-way valve according to Example 2 of the present invention from another angle of view;
Fig. 18 illustrates a schematic structural diagram of a valve core component of the multi-way valve in Fig. 16;
Fig. 19 illustrates an exploded view of Fig. 18 from a top view;
Fig. 20 illustrates an exploded view of Fig. 18 from a bottom view;
Fig. 21 illustrates a schematic structural diagram of an interior of a second valve core of the multi-way valve in Fig. 16;
Fig. 22 illustrates a schematic structural diagram of a supporting seat of the multi-way valve in Fig. 16;
Fig. 23 illustrates a bottom view of the multi-way valve in Fig. 16;
Fig. 24 illustrates a sectional view of a multi-way valve according to Example 3 of the present invention;
Fig. 25 illustrates a schematic assembly diagram of a valve sheet, a sliding sheet, and a valve core seat of the multi-way valve in Fig. 24;
Fig. 26 illustrates a schematic assembly diagram of the valve sheet, the sliding sheet, and the valve core seat of the multi-way valve in Fig. 25 from another angle of view;
Fig. 27 illustrates a schematic assembly diagram of the valve sheet, the sliding sheet, and a metal sleeve of the multi-way valve in Fig. 24;
Fig. 28 illustrates a schematic assembly diagram of the sliding sheet, the valve sheet, and a shaft sleeve of the multi-way valve in Fig. 24;
Fig. 29 illustrates a schematic structural diagram of the valve sheet of the multi-way valve in Fig. 24;
Fig. 30 illustrates a schematic structural diagram of a first valve core of the multi-way valve in Fig. 24;
Fig. 31 illustrates a schematic structural diagram of a valve core component of a multi-way valve according to Example 4 of the present invention; and
Fig. 32 illustrates a schematic assembly diagram of a second valve core, a first transmission structure, and a second transmission structure in Fig. 31.

The above accompanying drawings include reference numerals as follows:
10. valve core component;
11. first valve core; 1101. first flow passage; 11011. first flow channel; 11012. second flow channel; 11013. third flow channel; 11014. fourth flow channel; 111. first circular plate; 112. second circular plate; 113. first partition plate; 114. second partition plate; 115. third partition plate; and 116. second stopping block;
12. second valve core; 1201. second flow passage; 12011. fifth flow channel; 12012. sixth flow channel; 12013. seventh flow channel; 12014. eighth flow channel; 121. first casing; 122. second casing; 1231. first baffle; 1232. second baffle; 1233. third baffle; 1234. fourth baffle; 1235. fifth baffle; 1236. sixth baffle; 1237. seventh baffle; 124. blocking plate; 125. valve sheet; 1251. first plate body; 1252. second plate body; and 1253. limiting port;
13. first transmission structure; 131. ratchet groove; 1311. guide surface; 1312. stop surface; 132. limiting block; 133. first limiting plate; and 134. ratchet wheel;
14. second transmission structure; 141. limiting member; 1411. pushing block; 1412. fixed block; 1413. connecting member; 1414. limiting post; 142. elastic member; 1421. elastic sheet; 1422. first spring; 143. mounting groove; 144. pawl; 145. second limiting plate; and 1451. limiting groove;
15. press-fitting member; 151. bolt segment; 152. press-fitting segment; and 1521. first limiting inclined surface;
16. valve core shaft; 161. first valve core shaft; 162. second valve core shaft; 1621. shaft body; and 1622. limiting end plate;
17. sliding sheet; 1701. second limiting inclined surface; 1702. third opening; 1703. notch; 171. third plate body; and 172. fourth plate body;
18. elastic support assembly; 181. metal sleeve; 1811. first segment; 1812. second segment; and 182. second spring;
20. valve housing; 201. limiting hole; 202. first flow cavity; 21. bottom plate; 211. first flow port; 212. second flow port; 22. outer side wall; and 23. inner side wall;
30. shaft sleeve; and 301. slot;
41. flow path sealing gasket; 42. valve core sealing gasket; 421. first opening; 422. second opening; 43. pressing sheet; and 44. sealing member;
501, first flow path; 502, second flow path; and 503, back pressure cavity;
60. supporting seat; 61. limiting protrusion; 62. and first returning protrusion; and
70. valve core seat; 71. groove; 72. stopping protrusion; and 73. first stopping block.

### Detailed Description of the Embodiments

The technical solutions in the examples of the present invention are clearly and completely described below in combination with the accompanying drawings in the examples of the present invention. Apparently, the examples described are merely some rather than all examples of the present invention. The following description of at least one illustrative example is merely illustrative actually and in no way serves as any limitation on the present invention and its application or usage. All other examples obtained by a person of ordinary skill in the art based on the examples of the present invention without creative efforts shall fall within the scope of protection of the present invention.

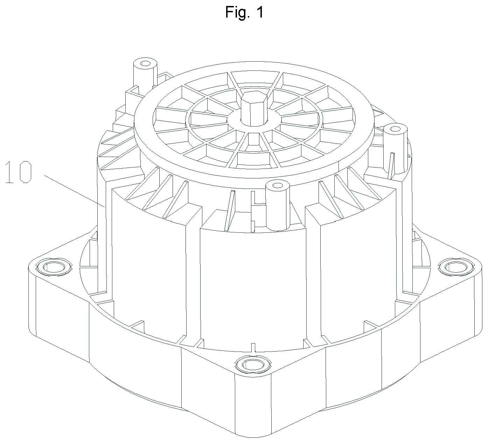

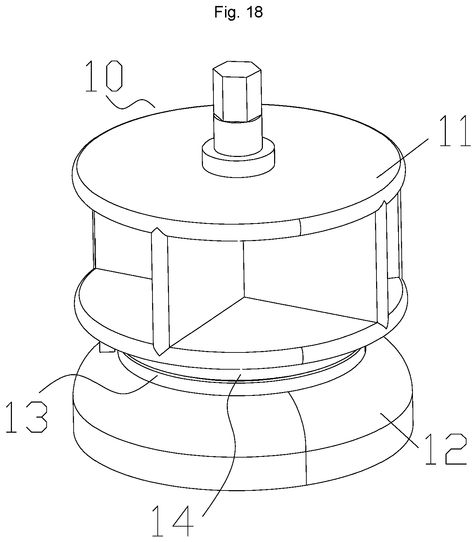

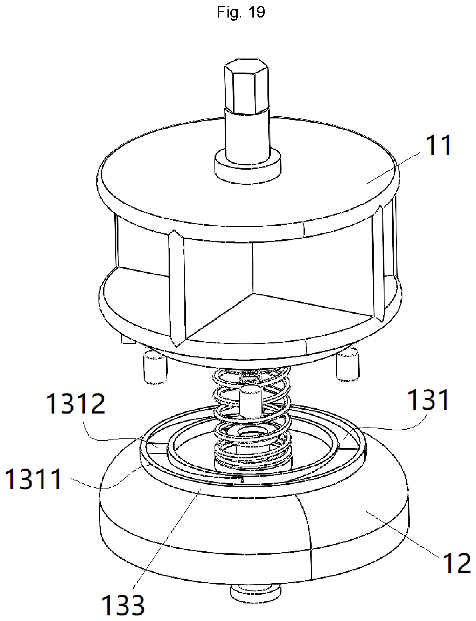

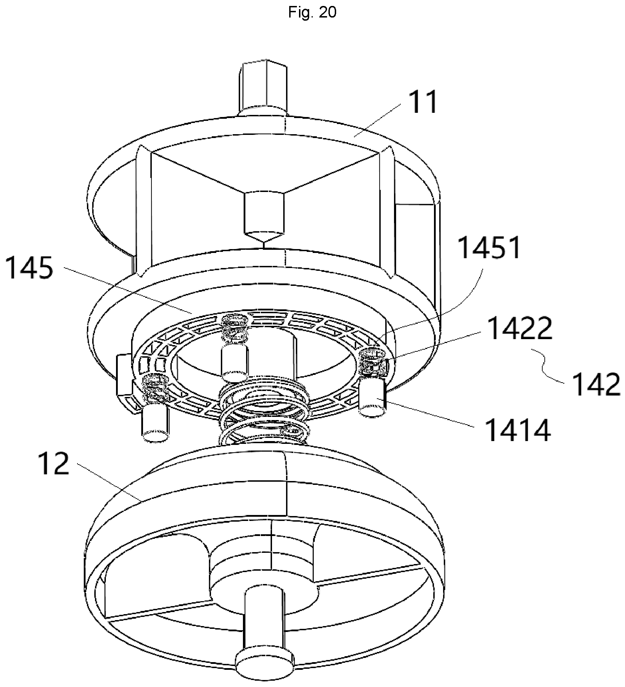

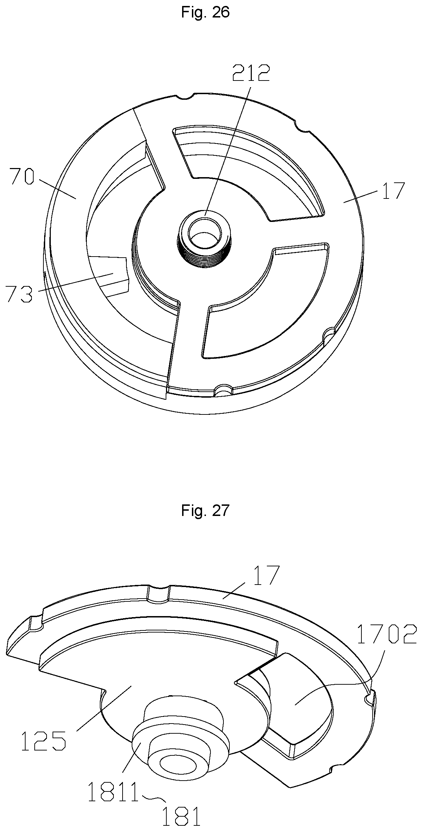

As shown in Fig. 1 to Fig. 32, the examples of the present invention provide a multi-way valve. The multi-way valve includes a valve housing 20 and a valve core component 10 arranged in a cavity of the valve housing 20. The valve core component 10 includes a first valve core 11, a second valve core 12, and an elastic support assembly 18 arranged between the first valve core 11 and the second valve core 12. Through an elastic force of the elastic support assembly 18, the second valve core 12 is pressed against a bottom wall of the cavity of the valve housing 20.

In some embodiments, through the elastic support assembly 18, the first valve core 11 is pressed while the second valve core 12 is supported. The first valve core 11 and the second valve core 12 can be favorably limited in an axial direction. The situation that in the prior art, the valve core is likely to move under an impact action of flowing fluid, causing failure of the valve core component 10 is prevented. Stability and sealing performance of the valve core component 10 are improved.

In some embodiments, the first valve core 11 and the second valve core 12 are coaxially arranged, such that the multi-way valve has a small overall occupied area and compact structure. The first valve core 11 and the second valve core 12 are both arranged in the cavity of the valve housing 20 and in limit-fit with a side wall of the cavity of the valve housing 20. The first valve core 11 and the valve housing 20 form a plurality of first flow paths 501. The second valve core 12 and the valve housing 20 form a plurality of second flow paths 502. The first flow paths 501 and the second flow paths 502 are spaced apart from each other. Thus, adjustable types of operating conditions of the valve core component are improved, and performance of the valve core component can be improved. The elastic support assembly 18 is configured to support the first valve core 11, and the first valve core 11 is limited between the valve housing 20 and the elastic support assembly 18. Thus, the situation that the first flow paths 501 and the second flow paths 502 are likely to internally leak can be avoided.

The first flow paths 501 and the second flow paths 502 are spaced apart from each other, such that the first flow paths 501 passing through the first valve core 11 are not in communication with the second flow paths 502 passing through the second valve core 12. The first valve core 11 and the second valve core 12 can be controlled independently, to form a plurality of different flow modes to satisfy user requirements. Thus, the first valve core 11 or the second valve core 12 can be operated independently.

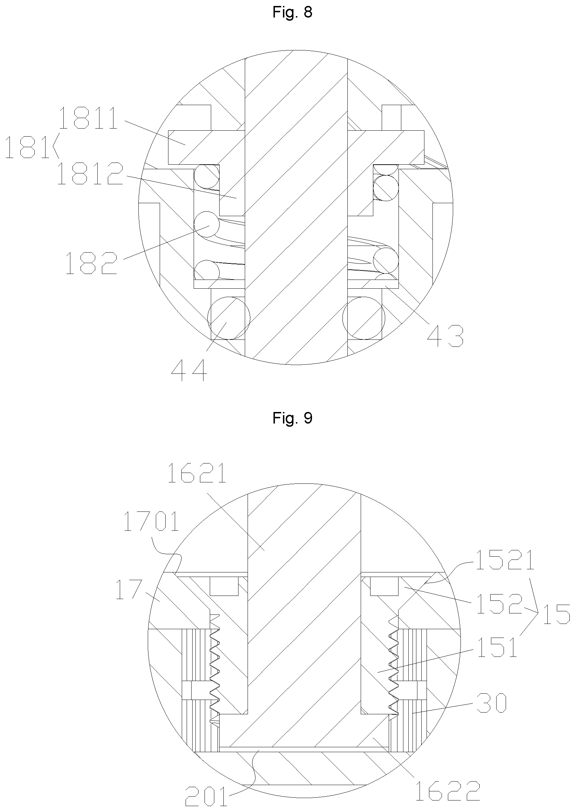

As shown in Fig. 8, Fig. 16, and Fig. 24 (in Example 1, Example 2 and Example 3), the valve core component 10 further includes a second valve core shaft 162 connected with the valve housing 20. The elastic support assembly 18 includes a metal sleeve 181 and a second spring 182. The metal sleeve 181 is fixedly sleeved on a periphery of the second valve core shaft 162. The second spring 182 is sleeved on the periphery of the second valve core shaft 162. Two ends of the second spring abut against the metal sleeve 181 and a top wall of the second valve core 12 respectively. The first valve core 11 is in stop-fit with one end of the metal sleeve 181 facing away from the second spring 182.

In some embodiments, through such an arrangement, the elastic support assembly 18 can be favorably mounted and limited. The situation that the elastic support assembly 18 is likely to move, such that the elastic support assembly fails to support or press the first valve core 11 and the second valve core 12 can be avoided. In some embodiments, through the second valve core shaft 162, coaxiality of the valve housing 20, the first valve core 11, the second valve core 12 and the elastic support assembly 18 can be ensured. The valve core component 10 can be favorably mounted, and performance of the valve core component can be ensured.

On the other hand, through the metal sleeve 181, the first valve core 11 is supported, and one end of the second spring 182 is limited. Through the second spring 182 and the metal sleeve 181, the second valve core 12 is pressed. Thus, reliability of support and mounting of the first valve core 11 and the second valve core 12 of the valve core component are ensured. Specifically, a shape and a structure of the metal sleeve 181 can be adjusted according to an actual situation to be adapted to different first valve cores 11 and second valve cores 12. After the valve core component is mounted, the second spring 182 is in a compressed state, and an elastic force generated by an expanding trend of the second spring 182 acts on the metal sleeve 181 and the second valve core 12 such that the second valve core 12 can be favorably pressed.

In some embodiments, one end of the second valve core shaft 162 is located at a center of the first valve core 11. The other end of the second valve core shaft 162 is located at a center of the second valve core 12 and connected to the valve housing 20. The second valve core 12 is rotated around the second valve core shaft 162. A gap is provided between the metal sleeve 181 and the second valve core shaft 162. Through such an arrangement, through the second valve core shaft 162, coaxiality of the second valve core 12, the first valve core 11, and the valve housing 20 is limited, to ensure reliability and stability of the valve core component 10.

In some embodiments, the metal sleeve 181 is provided with a first segment 1811 and a second segment 1812 which are connected with each other. The second spring 182 abuts against one surface of the first segment 1811. The other surface of the first segment 1811 is in stop-fit with the first valve core 11. Or the second spring 182 abuts against one surface of the first segment 1811 facing away from the second segment 1812. One surface of the second segment 1812 facing away from the first segment 1811 is in stop-fit with the first valve core 11. Through such an arrangement, through the metal sleeve 181, the first valve core 11 is supported, and one end of the second spring 182 is limited. Through the second spring 182 and the metal sleeve 181, the second valve core 12 is pressed. Thus, reliability of support and mounting of the first valve core 11 and the second valve core 12 of the valve core component 10 are ensured. Specifically, a shape and a structure of the metal sleeve 181 can be adjusted according to an actual situation to be adapted to different first valve cores 11 and second valve cores 12. After the valve core component 10 is mounted, the second spring 182 is in a compressed state, and an elastic force generated by an expanding trend of the second spring 182 acts on the metal sleeve 181 and the second valve core 12 such that the second valve core 12 can be favorably pressed.

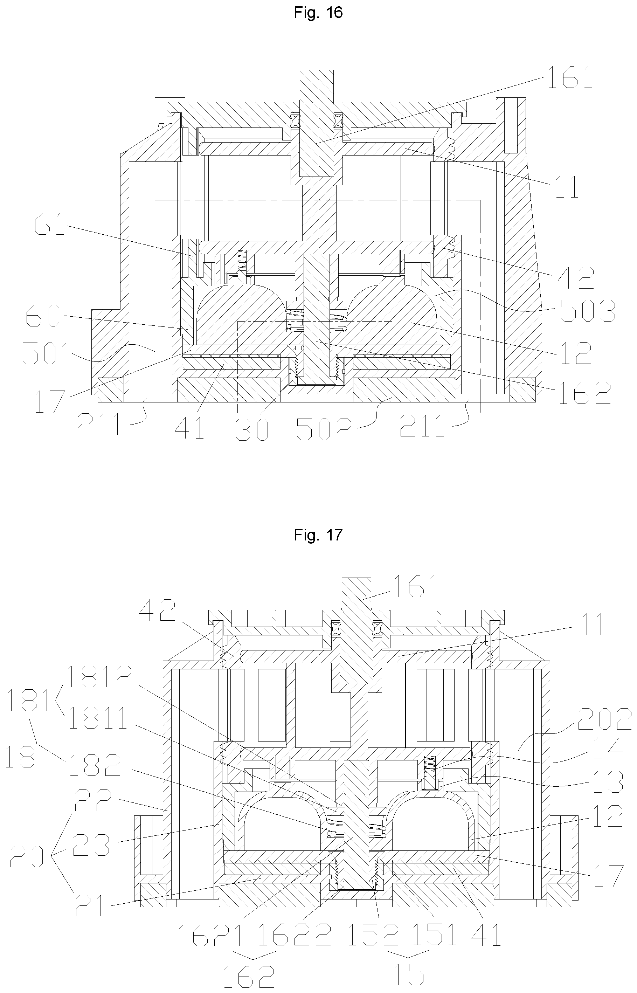

In Example 2 shown in Fig. 16 to Fig. 23, the metal sleeve 181 is provided with a first segment 1811 and a second segment 1812 connected to each other. The second spring 182 abuts against one surface of the first segment 1811 facing away from the second segment 1812. One surface of the second segment 1812 facing away from the first segment 1811 is in stop-fit with the first valve core 11. In some embodiments, the metal sleeve 181 includes an abutting plate. The abutting plate forms the first segment 1811. The first segment 1811 is located below the second segment 1812 and has a radial size greater than that of the second segment 1812. A lower surface of the abutting plate is configured to abut against the second spring 182 to limit the second spring 182. One end of the second segment 1812 facing away from the abutting plate is configured to support the first valve core 11. Through such an arrangement, a sleeve area between the metal sleeve 181 and the second valve core shaft 162 is increased, and reliability and stability of a connection between the metal sleeve 181 and the second valve core shaft 162 can be ensured. On the other hand, by arranging an abutting segment, a limiting effect on one end of the second spring 182 can be ensured.

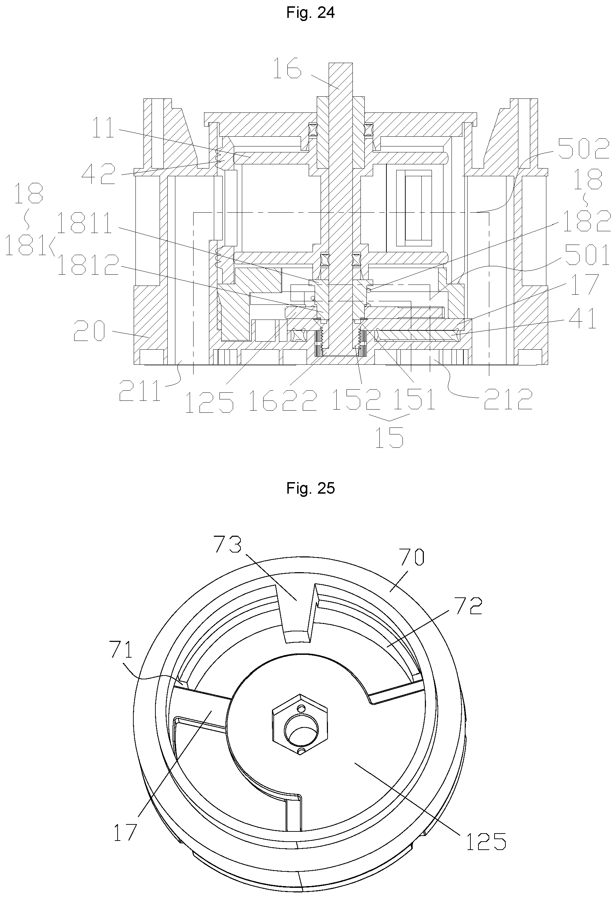

In Example 1 shown in Fig. 1 to Fig. 15 and Example 3 shown in Fig. 24 to Fig. 30, the metal sleeve 181 is provided with a first segment 1811 and a second segment 1812 connected to each other. The second spring 182 abuts against one surface of the first segment 1811, and the other surface of the first segment 1811 is in stop-fit with the first valve core 11. In the example, the metal sleeve 181 includes an abutting plate. The abutting plate forms the first segment 1811. The first segment 1811 is located above the second segment 1812 and has a radial size less than that of the second segment 1812. The second spring 182 is arranged, in a sleeve manner, on a periphery of the second segment 1812 and abuts against a lower surface of the abutting plate. An upper surface of the abutting plate is configured to support the first valve core 11. Through such an arrangement, a sleeve area between the metal sleeve 181 and the second valve core shaft 162 or the valve core shaft 16 is increased. Reliability and stability of a connection between the metal sleeve 181 and the second valve core shaft 162 or the valve core shaft 16 are ensured. By arranging the abutting segment, a limiting effect on one end of the second spring 182 can be ensured. On the other hand, the second spring 182 is arranged, in a sleeve manner, on the periphery of the second segment 1812 such that the second spring 182 can be favorably mounted and limited.

As shown in Fig. 8 (Example 1), the valve core component 10 further includes a pressing sheet 43 and a sealing member 44 which are arranged, in a sleeve manner, on the second valve core shaft 162. The pressing sheet 43 is fixedly connected with the second valve core shaft 162. The second spring 182 is located between the pressing sheet 43 and the metal sleeve 181. The sealing member 44 is located between the pressing sheet 43 and the second valve core 12. Through such an arrangement, sealing between the second valve core shaft 162 and the second valve core 12 is achieved through the sealing member 44 to avoid internal leakage. The sealing member 44 is sealed through the pressing sheet 43, to prevent the sealing member 44 from falling off. Moreover, the pressing sheet 43 can be press-fitted through the second spring 182, and reliability and stability of limitation on the sealing member 44 are further ensured.

On the other hand, the valve core component 10 further includes a first valve core shaft 161. One end of the first valve core shaft 161 penetrates the first valve core 11, and the other end extends out of the valve housing 20. Thus, the valve core component 10 can be favorably connected to an actuation assembly (an actuator, etc.). One end of the first valve core shaft 161 is located at the center of the first valve core 11, and the other end of the first valve core shaft 161 is located at the center of the second valve core 12 and connected to the valve housing 20.

It should be noted that the first valve core shaft 161 and the second valve core shaft 162 in the example can be arranged separately, or arranged integrally to form the valve core shaft 16.

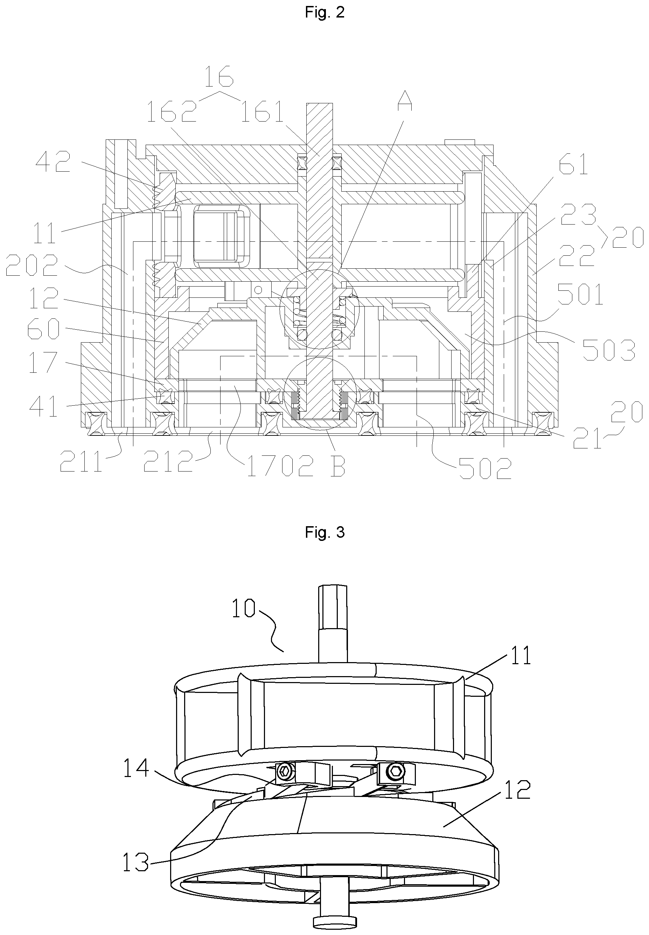

In Example 1 shown in Fig. 2 and Example 2 shown in Fig. 16 and Fig. 17, the first valve core shaft 161 and the second valve core shaft 162 are arranged separately. The elastic support assembly 18 is arranged on the second valve core shaft 162. The first valve core 11 is provided with a fitting groove or a fitting hole having an opening facing the second valve core 12. One end of the first valve core shaft 161 is located in the fitting groove or the fitting hole. Through such an arrangement, the second valve core shaft 162 can be favorably fastened. The situation that the second valve core shaft 162 is likely to drive the elastic support assembly 18 to move together can be avoided.

In Example 3 shown in Fig. 24, the first valve core shaft 161 and the second valve core shaft 162 are arranged integrally to form the valve core shaft 16. The elastic support assembly 18 is arranged on the valve core shaft 16 and located between the first valve core 11 and the second valve core 12. Through such an arrangement, it is ensured that the first valve core 11 and the second valve core 12 are coaxially rotated, to ensure reliability of the valve core component 10.

In some embodiments, the first valve core 11 and/or the second valve core 12 is provided with a guide structure, and the metal sleeve 181 is provided with a guide segment. The guide segment is in guide-fit with the guide structure. Through such an arrangement, coaxiality between the first valve core 11 and the second valve core 12 and the metal sleeve 181 is further ensured, and the valve core component 10 can be favorably mounted. Whether the guide structure and the guide segment are arranged and an arrangement situation can be adjusted according to an actual situation, and are not limited to the examples shown in the present invention.

In some embodiments shown in Fig. 1 to Fig. 30 (in Example 1, Example 2 and Example 3), a bottom of the valve housing 20 is provided with a limiting hole 201. The valve core component 10 further includes a press-fitting member 15. The first valve core 11 is located on one side of the second valve core 12 facing away from the limiting hole 201. One end of the second valve core shaft 162 is located in the limiting hole 201. At least part of the press-fitting member 15 is arranged in the limiting hole 201 and in push-fit with the second valve core shaft 162, to make the second valve core shaft 162 press-fitted in the limiting hole 201 and limit an upward movement of the second valve core shaft 162 in an axial direction. The second valve core 12 is rotated around the second valve core shaft 162. The second valve core shaft 162 is in contact with a bottom surface of the limiting hole 201. In a case that the second valve core shaft 162 is not in contact with the bottom surface of the limiting hole 201, the second valve core shaft 162 can move in a small space between the press-fitting member 15 and the bottom surface of the limiting hole 201. A slight movement of the second valve core shaft 162 can be ignored.

In some embodiments, the second valve core shaft 162 penetrates the second valve core 12, and two ends of the second valve core shaft are located in the limiting hole 201 and the first valve core 11 respectively. During mounting, the second valve core shaft 162 is mounted first, and one end of the second valve core shaft 162 goes deep into the limiting hole 201. Then, the press-fitting member 15 is mounted into the limiting hole 201. As the press-fitting member 15 is mounted, the end of the second valve core shaft 162 extending into the limiting hole 201 is gradually pushed by the press-fitting member 15 to move in a direction close to the bottom surface of the limiting hole 201 until the press-fitting member 15 is mounted in place. Thus, the second valve core shaft 162 is completely mounted. Through the press-fitting member 15, one end of the second valve core shaft 162 extends into the limiting hole 201 to be press-fitted. Thus, the situation that the second valve core shaft 162 is likely to violently move in the axial direction of the valve core component 10 to affect reliability of the valve core component 10 is avoided. Mounting stability of the second valve core shaft 162 is improved.

As shown in Fig. 9, Fig. 10, Fig. 16, Fig. 17, Fig. 24, Fig. 26, and Fig. 28, the multi-way valve further includes a shaft sleeve 30 embedded in the limiting hole 201 through injection molding. One end of the second valve core shaft 162 is located in the shaft sleeve 30. At least part of the press-fitting member 15 is arranged in the shaft sleeve 30 and in limit-fit with the second valve core shaft 162 and the shaft sleeve 30.

It should be noted that the shaft sleeve 30, the limiting hole 201, the press-fitting member 15, and related principles in the examples provided in the present invention are the same.

In some embodiments, the shaft sleeve 30 is configured to limit and guide mounting of the second valve core shaft 162 and the press-fitting member 15, and prevent the second valve core shaft 162 or the press-fitting member 15 from being in direct contact with or abutting against an inner wall of the limiting hole 201. On the other hand, the shaft sleeve 30 is embedded in the limiting hole 201 through injection molding such that the shaft sleeve 30 can be rapidly processed and mounted.

In some embodiments, the press-fitting member 15 is provided with an external thread, and the shaft sleeve 30 is provided with an internal thread. The press-fitting member 15 is in threaded connection to the shaft sleeve 30. Through such an arrangement, the press-fitting member 15 can be favorably mounted, and the second valve core shaft 162 can be favorably pushed by the press-fitting member 15. It should be understood that an operator can adjust a structure of the press-fitting member 15 and/or the shaft sleeve 30 according to an actual situation, to ensure a pushing effect on the second valve core shaft 162 based on ensuring a mounting effect. No example is given herein.

In some embodiments, a periphery of the shaft sleeve 30 is provided with a plurality of slots 301 extending in an axial direction of the limiting hole 201, and the plurality of slots 301 are arranged in a circumferential direction of the shaft sleeve 30. Through such an arrangement, a weight of the shaft sleeve 30 can be reduced. Moreover, a contact area between the shaft sleeve 30 and an inner wall of the limiting hole 201 is reduced, and the shaft sleeve 30 can be favorably injection-molded and demolded. On the other hand, the shaft sleeve 30 may be made into a hollow structure, to further reduce the weight of the shaft sleeve 30 based on ensuring a function of the shaft sleeve 30.

As shown in Fig. 9 and Fig. 17, the second valve core shaft 162 includes a shaft body 1621 and a limiting end plate 1622 which are connected to each other. The limiting end plate 1622 is arranged at one end of the shaft body 1621 and located in the limiting hole 201. A radial size of the limiting end plate 1622 is greater than a radial size of the shaft body 1621. The press-fitting member 15 is arranged, in a sleeve manner, on a periphery of the shaft body 1621 and in push-fit with one side of the limiting end plate 1622 facing away from a bottom surface of the limiting hole 201. As shown in Fig. 24, in the example, the first valve core shaft 161 and the second valve core shaft 162 are integrally arranged as the valve core shaft 16. A bottom end of the valve core shaft 16 is provided with a limiting end plate 1622 having an increased radial size.

In some embodiments, a periphery of the limiting end plate 1622 is in limit-fit with an inner wall of the shaft sleeve 30, to ensure coaxiality of the press-fitting member 15 and the second valve core shaft 162. Limit it may be clearance fit, interference fit, etc. The press-fitting member 15 is arranged, in a sleeve manner, on the periphery of the shaft body 1621 and abuts against the limiting end plate 1622. The external thread of the press-fitting member 15 is in threaded connection to the inner wall of the shaft sleeve 30. As the press-fitting member 15 extends into the shaft sleeve 30, the press-fitting member 15 gradually presses downwards the limiting end plate 1622 until the press-fitting member 15 is screwed in place. Thus, the second valve core shaft 162 is completely limited and mounted. It can be understood that press-fitting on the limiting end plate 1622 is not certainly tight pressing, as long as a distance between the bottom wall of the limiting hole 201 and the bottom wall of the limiting end plate 1622 does not cause the limiting end plate 1622 to substantially move in the axial direction of the valve core component 10.

On the other hand, In some embodiments shown in Fig. 1 to Fig. 30 (in Example 1, Example 2, and Example 3), the valve core component 10 further includes a sliding sheet 17. The sliding sheet 17 is arranged in the valve housing 20. The second valve core 12 is circumferentially rotated on a surface of the sliding sheet 17. The sliding sheet 17 is sandwiched between the press-fitting member 15 and the valve housing 20.

In some embodiments, the valve housing 20 is provided with a plurality of second flow ports 212 (that is, some valve ports). A structure of the sliding sheet 17 is adapted to at least part of the bottom of the valve housing 20 provided with the second flow ports 212 (in the examples shown in Fig. 1 to Fig. 23, a structure of the sliding sheet 17 is adapted to the bottom of the valve housing 20 and is circular; and in the examples shown in Fig. 24 to Fig. 30, a structure of the sliding sheet 17 is adapted to part of the bottom of the valve housing 20 and is a sector). The sliding sheet 17 is provided with a plurality of third openings 1702 corresponding to the plurality of second flow ports 212. Any one of the third openings 1702 is provided corresponding to at least one of the second flow ports 212 (in the examples shown in Fig. 1 to Fig. 23, a third opening 1702 is correspondingly provided at any one of the second flow ports 212; and in the examples shown in Fig. 24 to Fig. 30, third openings 1702 are correspondingly provided at some of the second flow ports 212), to ensure communication between the second flow ports 212 and the second valve core 12. The second valve core 12 is provided with a plurality of second flow passages. Two second flow ports 212 can be in indirect communication with each other through one second flow passage. Connections and disconnections between different second flow ports 212 can be adjusted through rotation of the second valve core 12. By sandwiching the sliding sheet 17, the situation that when the sliding sheet 17 is not firmly fixed and moves, fluid passing through a flow hole of the sliding sheet 17 from the second valve core 12 flows into two second flow ports 212 at the same time, and directly flows between the two second flow ports 212, causing internal leakage of the fluid is avoided. Moreover, the situation that due to a movement of the sliding sheet 17, flow resistance of the fluid is increased is avoided. Mounting and fixing effects on the sliding sheet 17 are improved. Stability of the sliding sheet 17 is sufficiently ensured. The movement of the sliding sheet 17 is avoided, and occurrence of internal leakage and increase of flow resistance are avoided.

In some embodiments, the "movement of the sliding sheet 17" includes not only circumferential rotation or an axial movement, but also an axial movement of the valve housing 20.

As shown in Fig. 9, Fig. 17, and Fig. 24, the sliding sheet 17 abuts against the bottom of the cavity of the valve housing 20. One end of the press-fitting member 15 is provided with a press-fitting protrusion. The sliding sheet 17 is sandwiched between the press-fitting protrusion and the valve housing 20. The press-fitting protrusion is in push-fit with the sliding sheet 17, to make, during mounting of the press-fitting member 15, the sliding sheet 17 press-fitted at the bottom of the cavity of the valve housing 20. Through such an arrangement, the sliding sheet 17 is press-fitted through the press-fitting protrusion, and reliability and convenience of press-fitting are ensured. At least part of the press-fitting protrusion is located in the sliding sheet 17.

In some embodiments, the bottom of the valve housing 20 is further provided with a sealing groove having an opening facing an interior of the cavity of the valve housing 20. The multi-way valve further includes a flow path sealing gasket 41 arranged in the sealing groove. A shape of the sealing groove matches a shape of the flow path sealing gasket 41. A top of the flow path sealing gasket 41 protrudes from the opening of the sealing groove or is flush with the opening of the sealing groove. The sliding sheet 17 is located on a surface of the top of the flow path sealing gasket 41. The flow path sealing gasket 41 is configured to seal communication locations between the second valve core 12 and the plurality of second flow ports 212. The sliding sheet 17 is located at the opening of the sealing groove. The opening of the sealing groove is blocked after the sliding sheet 17 is fixed. Thus, through the press-fitting protrusion on the press-fitting member 15, the sliding sheet 17 is press-fitted in a mounting process of the press-fitting member 15. Thus, the sliding sheet 17 can make the flow path sealing gasket 41 press-fitted in the sealing groove and block an opening of the sealing groove. The situation that in the prior art, due to a movement of the sliding sheet 17, sealing effects of communication locations between the second valve core 12 and the plurality of second flow ports 212 are poor is avoided. The sealing effects between the second valve core 12 and the plurality of second flow ports 212 are improved while the movement of the sliding sheet 17 is limited.

In some embodiments, in Example 1 shown in Fig. 9 (arrangements in Example 2 and Example 3 are the same as that in Example 1), the press-fitting protrusion is provided with a first limiting inclined surface 1521. The sliding sheet 17 is provided with a through hole for the press-fitting member 15 to pass through. A radial size of the through hole is gradually decreased in a direction close to the bottom of the valve housing 20. A second limiting inclined surface 1701 adapted to the first limiting inclined surface 1521 is formed. The first limiting inclined surface 1521 is in push-fit with the second limiting inclined surface 1701. Through such an arrangement, the second limiting inclined surface can be favorably processed and formed. Coaxiality of the sliding sheet 17 and the valve housing 20 can be ensured in a pressing and sandwiching process of the sliding sheet 17. Sandwiching and limiting effects on the sliding sheet 17 are improved. Rotation of the sliding sheet 17, a movement of the sliding sheet 17 in the axial direction of the valve core component 10, and a movement of the sliding sheet 17 in the radial direction of the valve core component 10 can be limited at the same time.

In some embodiments, both the first limiting inclined surface 1521 and the second limiting inclined surface 1701 are annular inclined surfaces. Through such an arrangement, the coaxiality of the sliding sheet 17 and the valve housing 20 can be further ensured.

With Example 1 shown in Fig. 9 as an instance (the press-fitting member 15 in Example 2 and Example 3 is the same as the press-fitting member 15 in Example 1), the press-fitting member 15 includes a bolt segment 151 and a press-fitting segment 152. A periphery of the bolt segment 151 is provided with an external thread. A radial size of the press-fitting segment 152 is gradually increased in a direction facing away from the bolt segment 151. The press-fitting protrusion is formed on the press-fitting segment 152. Through such an arrangement, the press-fitting protrusion can be favorably processed and formed. The press-fitting protrusion can be favorably adapted to the through hole of the sliding sheet 17. Moreover, the press-fitting member 15 can be favorably detachably mounted, and the sliding sheet 17 can be favorably pressed and clamped through the press-fitting protrusion.

In some embodiments shown in Fig. 1 to Fig. 23 (in Example 1 and Example 2), a cavity region delimited by the first valve core 11, the second valve core 12, and the valve housing 20 form a back pressure cavity 503. Fluid in the second valve core 12 is not in communication with fluid in the back pressure cavity 503. Fluid in the first valve core 11 is in communication with the fluid in the back pressure cavity 503. Through such an arrangement, part of the fluid flowing through the first flow path 501 flows through the valve core sealing gasket 42 into the back pressure cavity 503 to exert a downward pressure on the second valve core 12. Thus, pressing reliability of the second valve core 12 is further improved.

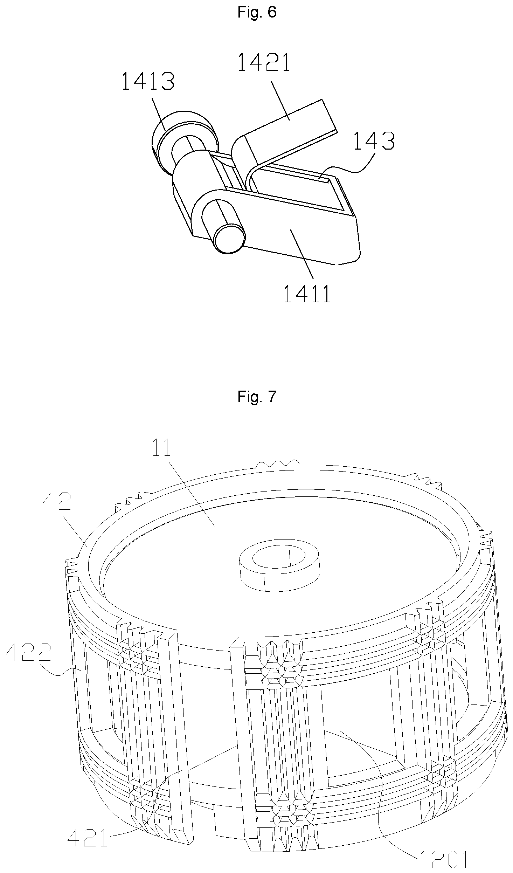

In some embodiments, as shown in Fig. 7, the multi-way valve further includes a valve core sealing gasket 42 arranged around the first valve core 11. The valve core sealing gasket 42 is arranged on a side wall of the cavity of the valve housing 20 and in seal-fit with a periphery of the first valve core 11. The valve core sealing gasket 42 is provided with a first opening 421 penetrating a side wall of the valve core sealing gasket 42 in an axial direction of the first valve core 11. The fluid in the first valve core 11 is in communication with the fluid in the back pressure cavity 503 through the first opening 421 on the side wall of the valve core sealing gasket 42.

In some embodiments, the valve core sealing gasket 42 is further in seal-fit with the side wall of the cavity of the valve housing 20. The first opening 421 penetrates the valve core sealing gasket 42 in the axial direction of the first valve core 11 and is in communication with the back pressure cavity 503. The back pressure cavity 503 is in communication with the second flow path 502 and spaced apart from the first flow path 501. Through such an arrangement, part of the fluid flowing through the second flow path 502 flows into the back pressure cavity 503 through the first opening 421 penetrating the valve core sealing gasket 42 and applies a downward pressure to the second valve core 12. Thus, pressing reliability of the second valve core 12 is further improved.

It can be understood that the first valve core 11 in the example is provided with a plurality of first flow passages 1101 in the circumferential direction. The valve core sealing gasket 42 is further provided with a plurality of second openings 422. The first openings 421 and the plurality of second openings 422 are spaced apart from each other in the circumferential direction of the first valve core 11. Any one of the first flow passages 1101 is in communication with two of the second openings 422 to form part of a first flow path 501. Through such an arrangement, different first flow paths 501 of the first valve core 11 can be favorably formed, and operating conditions can be favorably switched.

In some embodiments shown in Fig. 1 to Fig. 23 (in Example 1 and Example 2), the multi-way valve further includes a supporting seat 60. The supporting seat 60 is arranged on the bottom wall of the cavity of the valve housing 20, and part of the supporting seat is parallel to the side wall of the cavity of the valve housing 20. The supporting seat 60 is arranged, in a sleeve manner, on a periphery of the second valve core 12 and supports the valve core sealing gasket 42. A cavity region delimited by the supporting seat 60, the first valve core 11, and the second valve core 12 forms the back pressure cavity 503. Through such an arrangement, the valve core sealing gasket 42 can be favorably supported, and the back pressure cavity 503 can be favorably formed.

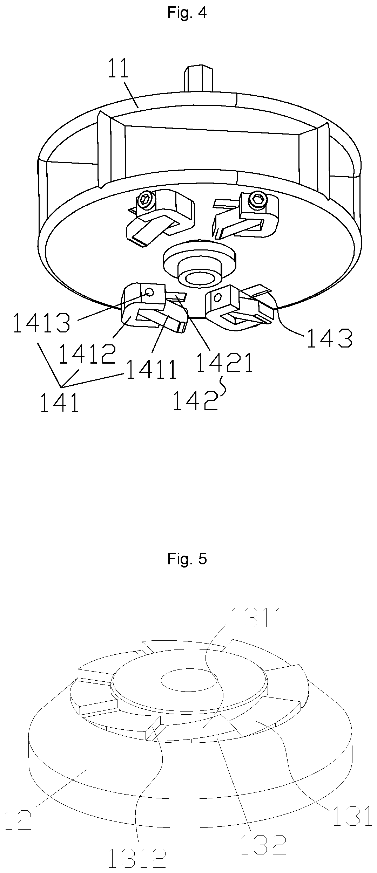

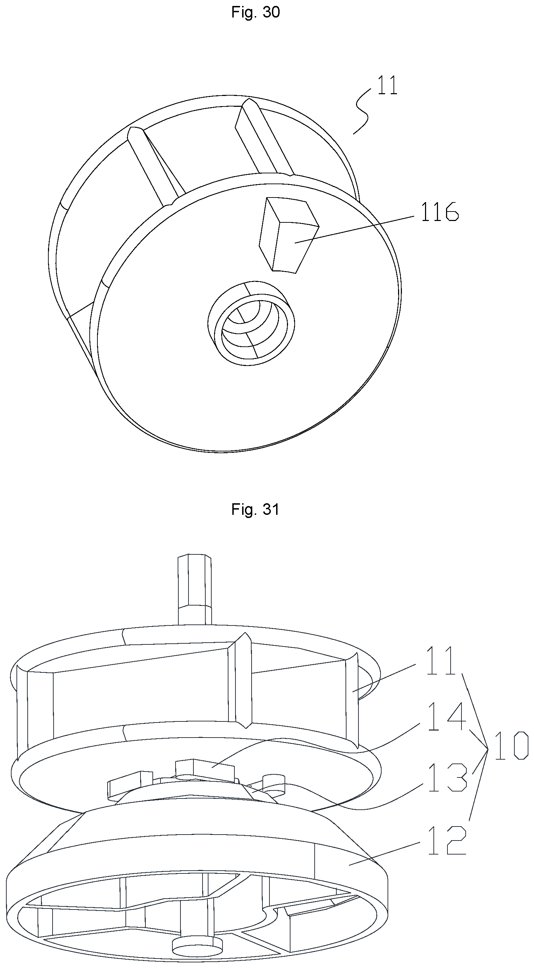

With Example 1 shown in Fig. 5 as an instance, the supporting seat 60 is provided with a limiting protrusion 61 and a first returning protrusion 62. The limiting protrusion 61 fits with the first opening 421, to limit relative rotation between the supporting seat 60 and the valve core sealing gasket 42. A bottom of the first valve core 11 is provided with a second returning protrusion (such as a second stopping block 116 shown in Fig. 30). The first returning protrusion 62 is in stop-fit with the second returning protrusion 64 in a circumferential direction. A location at which the first returning protrusion 62 abuts against the second returning protrusion may be a starting location of rotation of the first valve core 11.

In some embodiments, the relative rotation between the supporting seat 60 and the valve core sealing gasket 42 is limited through the limiting protrusion 61. The first valve core 11 is rotatably arranged in the valve core sealing gasket 42. When it is required to rotate the first valve core 11 to an initial location, it is only required to rotate the first valve core 11 and make the first returning protrusion 62 in stop-fit with the second returning protrusion. Convenience and reliability of adjusting the first valve core 11 back to the initial location can be improved.

As shown in Fig. 1 to Fig. 23 (that is, in Example 1 and Example 2), the valve housing 20 is provided with a plurality of first flow ports 211, a plurality of second flow ports 212, and a plurality of first flow cavities 202. The plurality of first flow cavities 202 are in communication with the plurality of first flow ports 211 in a one-to-one correspondence manner. The first valve core 11 is provided with a plurality of first flow passages 1101. The first flow passages 1101 are in communication with first flow cavities 202 corresponding to the first flow passages. Communication between the first flow ports 211 is switched through rotation of the first valve core 11. The second valve core 12 is provided with a plurality of second flow passages 1201. The second flow passages 1201 are in communication with second flow cavities 212 corresponding to the second flow passages. Communication between the second flow ports 212 is switched through rotation of the second valve core 12. The second flow passages 1201 are not in communication with the first flow passages 1101.

In some embodiments, the bottom wall of the valve housing 20 is a bottom plate 21. The plurality of first flow ports 211 are provided at an edge of the bottom plate 21. The plurality of the second flow ports 212 are provided in a middle of the bottom plate 21. Side walls in a circumferential direction of the valve housing 20 include an outer side wall 22 and an inner side wall 23. The plurality of first flow cavities 202 are formed between the outer side wall 22 and the inner side wall 23. When the first valve core 11 is rotated, communication between the first flow ports 211 can be switched (such that the first operating condition is any one of first operating sub-conditions). Similarly, when the second valve core 12 is rotated, communication between the second flow ports 212 can be switched (such that the second operating condition is any one of second operating sub-conditions). Since the first flow cavity 202 is formed between the outer side wall 22 and the inner side wall 23, fluid can favorably enter the first valve core 11 from the first flow port 211. In addition, the first flow path passing through the first valve core 11 is not in communication with the second flow path passing through the second valve core 12, such that the first valve core 11 and the second valve core 12 do not affect each other. Even if a structure of the first valve core 11 is adjusted, usage of the second valve core 12 cannot be affected. Even if a structure of the second valve core 12 is adjusted, usage of the first valve core 11 cannot be affected. An overall switching control procedure is simple. Through the fitting between the first valve core 11 and the second valve core 12, a variety of different flow modes and flow operating conditions can be formed, to satisfy user requirements.

In some embodiments, the second valve core 12 is located in the middle of the bottom plate 21. One end of the first valve core 11 in an axis direction of the multi-way valve is located at a top of the second valve core 12. The other end of the first valve core 11 in the axis direction of the multi-way valve abuts against a top of the valve housing 20. The first flow passage 1101 and two first flow cavities 202 and two first flow ports 211 which correspond to the first flow passage constitute a first flow path 501. The second flow passage 1201 and two second flow ports 212 corresponding to the second flow passage constitute a second flow path 502. Inlets and outlets of the first flow passages 1101 are located in a circumferential direction of the first valve core 11. The inner side wall 23 is provided with openings opposite the inlets and the outlets in the circumferential direction of the first valve core 11. Inlets and outlets of the second flow passages 1201 are located at one end of the second valve core 12 facing the bottom plate 21.

In some embodiments, the inner side wall 23 is provided with an opening opposite the first valve core 11 in a circumferential direction. The opening can be provided corresponding to the first flow cavity 202, such that inlets and outlets of the first flow passages 1101 are in communication with corresponding first flow ports 211. On the other hand, during operation of the multi-way valve provided in the example, fluid enters the first valve core 11 through one of the first flow ports 211, then flows through one of the first flow passages 1101 in the first valve core 11, and finally flows out through another one of the first flow ports 211. The fluid flows into the second valve core 12 through one of the second flow ports 212, then flows through the second flow passages 1201 in the second valve core 12, and finally flows out through another one of the second flow ports 212. The first flow ports 211 and the second flow ports 212 are provided separately and are not in communication with each other. The first flow passages 1101 and the second flow passages 1201 are arranged separately and are not in communication with each other. Thus, the first flow path 501 is not in communication with the second flow path 502. Through such an arrangement, the first valve core 11 and the second valve core 12 can be controlled separately. Even if structures of the first flow passages 1101 in the first valve core 11 are adjusted, a flow path flowing through the second valve core 12 cannot be affected. Similarly, even if structures of the second flow passages 1201 in the second valve core 12 are adjusted, a flow path flowing through the first valve core 11 cannot be affected. When the first valve core 11 and the second valve core 12 are used together, more communication modes and flow operating conditions can be provided. Moreover, the communication modes can be simply controlled.

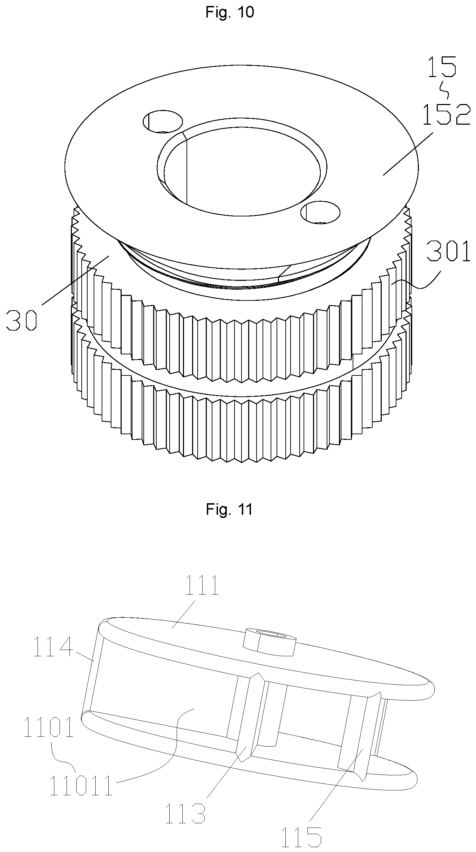

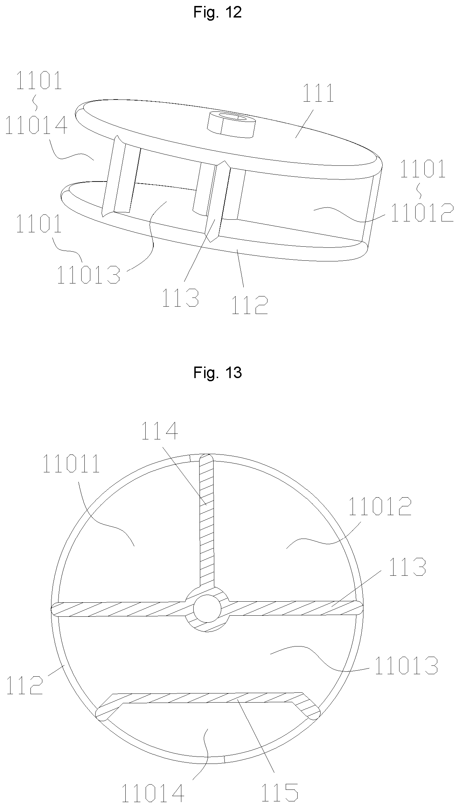

It should be understood that distribution of the plurality of first flow passages 1101 of the first valve core 11 in various examples of the present invention is the same. That is, sectional views of interiors can be shown in Fig. 13. With Example 1 shown in Fig. 11 to Fig. 13 as an instance, the plurality of first flow passages 1101 include a first flow channel 11011, a second flow channel 11012, a third flow channel 11013, and a fourth flow channel 11014 which are spaced apart from each other. Thus, through rotation of the first valve core 11, the first flow ports 211 are in communication with the first flow channel 11011, the second flow channel 11012, the third flow channel 11013, or the fourth flow channel 11014 which correspond to the first flow ports, to switch a flow mode of the first flow ports 211. Through such an arrangement, when the first valve core 11 is rotated, the first flow channel 11011, the second flow channel 11012, the third flow channel 11013, and the fourth flow channel 11014 can be in communication with the first flow ports 211, to switch the first operating condition of the first valve core 11.

In some embodiments, the first valve core 11 includes a first circular plate 111, a second circular plate 112, and a first partition plate 113. Two sides of the first partition plate 113 are connected to the first circular plate 111 and the second circular plate 112 respectively. A length of the first partition plate 113 is equal to a diameter of the first circular plate 111. The first flow channel 11011 and the second flow channel 11012 are spaced apart from each other on one side of the first partition plate 113. The third flow channel 11013 and the fourth flow channel 11014 are spaced apart from each other on the other side of the first partition plate 113. Through such an arrangement, the first flow channel 11011 and the second flow channel 11012 can be separated from the third flow channel 11013 and the fourth flow channel 11014 through the first partition plate 113 such that the plurality of flow channels can be favorably preliminarily formed.

In some embodiments, the first valve core 11 further includes a second partition plate 114 and a third partition plate 115. Two sides of the second partition plate 114 and two sides of the third partition plate 115 are connected to the first circular plate 111 and the second circular plate 112 respectively. The second partition plate 114 is perpendicular to the first partition plate 113. One side of the second partition plate 114, one side of the first partition plate 113, the first circular plate 111, and the second circular plate 112 form the first flow channel 11011. The other side of the second partition plate 114, one side of the first partition plate 113, the first circular plate 111, and the second circular plate 112 form the second flow channel 11012. One side of the third partition plate 115, the other side of the first partition plate 113, the first circular plate 111, and the second circular plate 112 form the third flow channel 11013. The other side of the third partition plate 115, the first circular plate 111, and the second circular plate 112 form the fourth flow channel 11014. Through such an arrangement, the first flow path 11011 is spaced apart from the second flow path 11012 through the second partition plate 114, and the third flow path 11013 is spaced apart from the fourth flow path 11014 through the third partition plate 115. Thus, reliability and stability of formation of the plurality of flow channels can be ensured.

It can be understood that a number of the first flow passages 1101, a number of the partition plates, etc. can be adjusted according to an actual situation.

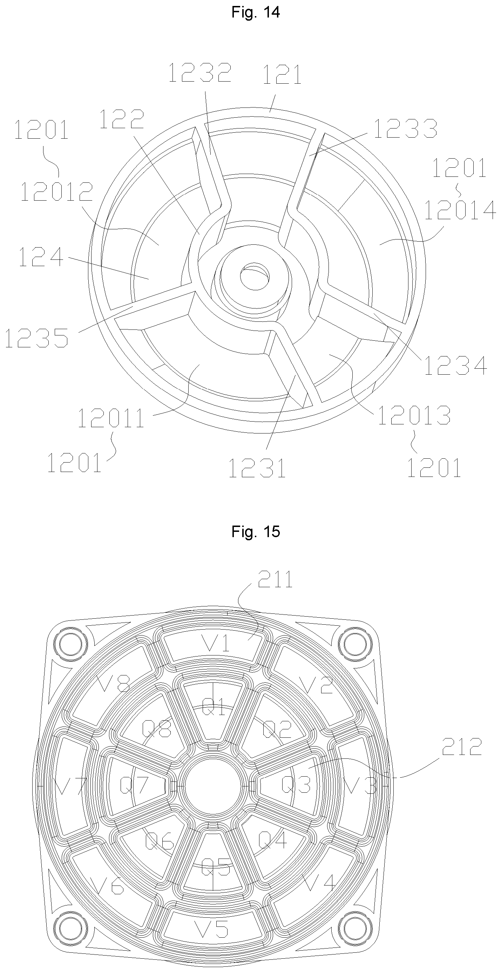

In Example 1 shown in Fig. 14, the plurality of second flow passages 1201 include a fifth flow channel 12011, a sixth flow channel 12012, a seventh flow channel 12013, and an eighth flow channel 12014 which are spaced apart from each other. Through rotation of the second valve core 12, the second flow ports 212 are in communication with the fifth flow channel 12011, the sixth flow channel 12012, the seventh flow channel 12013, or the eighth flow channel 12014 which correspond to the second flow ports, to switch a flow mode of the second flow ports 212. Through such an arrangement, when the second valve core 12 is rotated, the fifth flow channel 12011, the sixth flow channel 12012, the seventh flow channel 12013, or the eighth flow channel 12014 can be in communication with the second flow ports 212, to switch a second operating condition of the second valve core 12.

In some embodiments, the second valve core 12 includes a first casing 121, a second casing 122, a first baffle 1231, a second baffle 1232, and a blocking plate 124. The first casing 121 and the second casing 122 are coaxially arranged. The first casing 121, the second casing 122, the first baffle 1231, and the second baffle 1232 are all connected to the blocking plate 124. Two ends of the first baffle 1231 and two ends of the second baffle 1232 are connected to an inner wall of the first casing 121 and an outer wall of the second casing 122 respectively. The first baffle 1231 and the second baffle 1232 are arranged on two sides of the second casing 122 respectively, and located on a plane passing through an axis of the second casing 122. The fifth flow channel 12011 and the sixth flow channel 12012 are spaced apart from each other on one side of the first baffle 1231. The seventh flow channel 12013 and the eighth flow channel 12014 are located on the other side of the first baffle 1231. Through the above arrangement, the fifth flow channel 12011 and the sixth flow channel 12012 can be spaced apart from each other on a same side of the first baffle 1231 and the second baffle 1232. The seventh flow channel 12013 and the eighth flow channel 12014 can be spaced apart from each other on the other side of the first baffle 1231 and the second baffle 1232. Thus, communication with the second flow ports 212 can be performed, and the plurality of flow channels can be favorably preliminarily formed.

In some embodiments, the second valve core 12 further includes a third baffle 1233, a fourth baffle 1234, and a fifth baffle 1235. Two ends of the third baffle 1233, two ends of the fourth baffle 1234, and two ends of the fifth baffle 1235 are connected to the inner wall of the first casing 121 and the outer wall of the second casing 122 respectively. The fifth baffle 1235 is perpendicular to the first baffle 1231 or the second baffle 1232. The inner wall of the first casing 121, the outer wall of the second casing 122, the blocking plate 124, one side of the first baffle 1231, and one side of the fifth baffle 1235 form the fifth flow channel 12011. The inner wall of the first casing 121, the outer wall of the second casing 122, the blocking plate 124, one side of the second baffle 1232, and the other side of the fifth baffle 1235 form a sixth flow channel 12012. The inner wall of the first casing 121, an inner cavity of the second casing 122, the blocking plate 124, the other side of the first baffle 1231, the other side of the second baffle 1232, one side of the fourth baffle 1234, and one side of the third baffle 1233 form a seventh flow channel 12013. The inner wall of the first casing 121, the outer wall of the second casing 122, the other side of the fourth baffle 1234, and the other side of the third baffle 1233 form an eighth flow channel 12014. Through such an arrangement, through the third baffle 1233, the fourth baffle 1234, and the fifth baffle 1235, the fifth flow channel 12011, the sixth flow channel 12012, the seventh flow channel 12013, and the eighth flow channel 12014 are further spaced apart from each other. Thus, reliability and stability of forming the plurality of flow channels can be ensured.

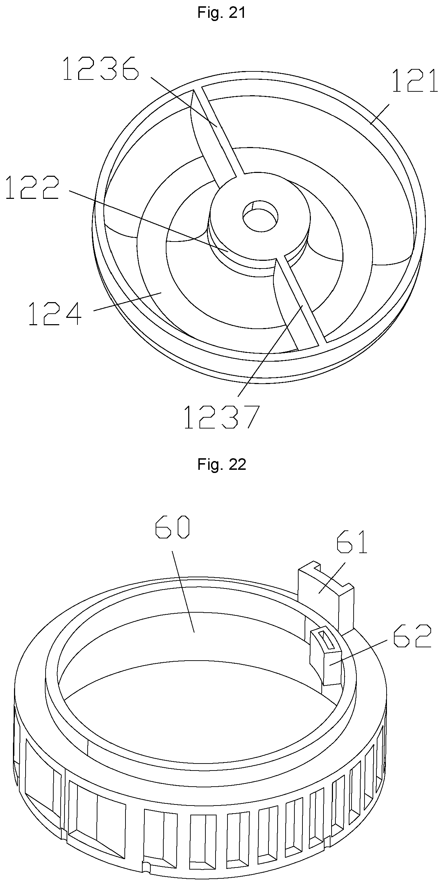

In Example 2 shown in Fig. 21, the second valve core 12 includes a first casing 121, a second casing 122, a blocking plate 124, a sixth baffle 1236, and a seventh baffle 1237. The first casing 121 and the second casing 122 are coaxially arranged. The first casing 121, the second casing 122, the sixth baffle 1236, and the seventh baffle 1237 are all connected to the blocking plate 124. The sixth baffle 1236 and the seventh baffle 1237 are symmetrically arranged on two sides of the second casing 122, and located on a plane passing through the axis of the second casing 122.

In some embodiments, the multi-way valve further includes an outer sealing gasket arranged on a bottom plate 21. The outer sealing gasket is configured to seal opening peripheries of the first flow ports 211 and the second flow ports 212, to ensure sealing performance of the multi-way valve.

In Example 1 shown in Fig. 1 to Fig. 15, eight first flow cavities 202 and eight first flow ports 211 are provided in a one-to-one correspondence manner. In a case that the first flow channel 11011, the second flow channel 11012, the third flow channel 11013, and the fourth flow channel 11014 of the first valve core 11 correspond to the eight first flow cavities 202 and the eight first flow ports 211, eight flow modes are provided (that is, eight first operating conditions are provided) when the first valve core 11 is rotated. As shown in Fig. 15, V1-V8 denote the eight first flow ports 211 respectively. By rotating the first valve core 11, the second valve core 12 can be switched between eight communication modes (second operating sub-conditions) as follows:
a first communication mode, in which V1 is in communication with V8, V2 is in communication with V3, V4 is in communication with V7, and V5 is in communication with V6;
a second communication mode, in which V1 is in communication with V2, V3 is in communication with V4, V5 is in communication with V8, and V6 is in communication with V7;
a third communication mode, in which V2 is in communication with V3, V4 is in communication with V5, V6 is in communication with V1, and V7 is in communication with V8;
a fourth communication mode, in which V3 is in communication with V4, V5 is in communication with V6, V7 is in communication with V2, and V8 is in communication with V1;
a fifth communication mode, in which V4 is in communication with V5, V6 is in communication with V7, V8 is in communication with V3, and V1 is in communication with V2;
a sixth communication mode, in which V5 is in communication with V6, V7 is in communication with V8, V1 is in communication with V4, and V3 is in communication with V2;
a seventh communication mode, in which V6 is in communication with V7, V8 is in communication with V1, V2 is in communication with V5, and V3 is in communication with V4; and
an eighth communication mode, in which V7 is in communication with V8, V1 is in communication with V2, V3 is in communication with V6, and V4 is in communication with V5.

Similarly, in Example 1 shown in Fig. 1 to Fig. 15, eight second flow ports 212 are provided. The second flow passages 1201 are in communication with second flow ports 212 corresponding to the second flow passages. In a case that the fifth flow channel 12011, the sixth flow channel 12012, the seventh flow channel 12013, and the eighth flow channel 12014 of the second valve core 12 correspond to the eight second flow ports 212, eight flow modes are provided (that is, eight second operating conditions are provided) when the second valve core 12 is rotated. In Fig. 5, Q1-Q8 denote eight second flow ports 212 respectively. By rotating the second valve core 12, the second valve core 12 can be switched in eight communication modes (second operating sub-conditions) as follows:
a first communication mode, in which Q1 is in communication with Q8, Q2 is in communication with Q3, Q4 is in communication with Q7, and Q5 is in communication with Q6;
a second communication mode, in which Q1 is in communication with Q2, Q3 is in communication with Q4, Q5 is in communication with Q8, and Q6 is in communication with Q7;
a third communication mode, in which Q2 is in communication with Q3, Q4 is in communication with Q5, Q6 is in communication with Q1, and Q7 is in communication with Q8;
a fourth communication mode, in which Q3 is in communication with Q4, Q5 is in communication with Q6, Q7 is in communication with Q2, and Q8 is in communication with Q1;
a fifth communication mode, in which Q4 is in communication with Q5, Q6 is in communication with Q7, Q8 is in communication with Q3, and Q1 is in communication with Q2;
a sixth communication mode, in which Q5 is in communication with Q6, Q7 is in communication with Q8, Q1 is in communication with Q4, and Q3 is in communication with Q2;
a seventh communication mode, in which Q6 is in communication with Q7, Q8 is in communication with Q1, Q2 is in communication with Q5, and Q3 is in communication with Q4; and
an eighth communication mode, in which Q7 is in communication with Q8, Q1 is in communication with Q2, Q3 is in communication with Q6, and Q4 is in communication with Q5.

To sum up, the multi-way valve in Example 1 has 64 flow modes (flow operating conditions) in total.

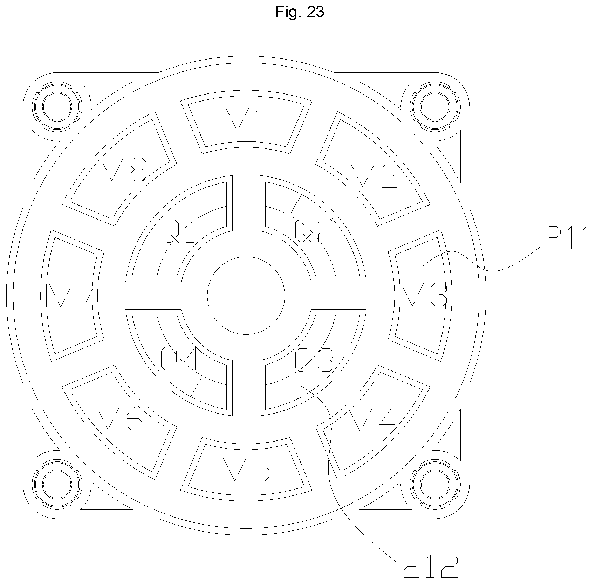

It can be understood that division of the flow channels of the first valve core 11 and a number of flow modes of the first valve core are the same as those in Example 1. That is, the first valve core has eight flow modes. A number of the second flow ports 212 and a number of flow modes (second operating conditions) of the second valve core 12 can be adaptively adjusted according to an actual situation. In Example 2 shown in Fig. 16 to Fig. 23, four second flow ports 212 are provided and are Q1, Q2, Q3, and Q4 (as shown in Fig. 23) respectively. Two second flow passages 1201 are arranged (as shown in Fig. 21). When the second valve core 12 is rotated, two communication modes (second operating sub-conditions) can be achieved. In one communication mode, Q1 is in communication with Q2, and Q3 is in communication with Q4. In the other communication mode, Q1 is in communication with Q4, and Q3 is in communication with Q2. To sum up, the multi-way valve in Example 2 has 16 flow modes (flow operating conditions) in total.

As shown in Fig. 24 to Fig. 30, Example 3 of the present invention discloses a multi-way valve. Different from the above examples, the second valve core 12 in Example 3 is rotatably arranged in the cavity of the valve housing 20, to completely open, completely close, or partially close a second flow port 212 opposite the second valve core 12. Through rotation of the second valve core 12, flow rates of the second flow ports 212 can be adjusted, to improve applicability of the multi-way valve.

As shown in Fig. 24 to Fig. 29, the second valve core 12 in Example 3 includes a valve sheet 125. The sliding sheet 17 is arranged in the cavity of the valve housing 20 and provided with third openings 1702. The third openings 1702 correspond to the second flow ports 212 in a one-to-one manner. The valve sheet 125 is rotated on a surface of the sliding sheet 17 and in seal-contact with the sliding sheet 17, to cause the valve sheet 125 to completely open, completely close, or partially close a third opening 1702 corresponding to the valve sheet.

For instance, in a case that two second flow ports 212 are provided. Part of the valve sheet 125 may be located at a first one of the second flow ports 212, and an area of the valve sheet 125 located at the second flow port 212 may be adjusted. The other second flow port 212 may be in a fully opened state. Thus, a flow rate of one second flow port 212 can be adjusted. Or, one part of the valve sheet 125 may be located at one second flow port 212, and the other part may be located at the other second flow port 212. An area proportion of the valve sheet 125 located at the two second flow ports 212 can be adjusted according to an actual situation. Thus, flow rates of the two second flow ports 212 can be adjusted.

In some embodiments, the sliding sheet 17 is further provided with a notch 1703. The notch 1703 directly faces the bottom wall of the valve housing 20. Through such an arrangement, the valve sheet 125 can be rotated to be opposite the notch 1703 of the sliding sheet in the axial direction of the multi-way valve. Then, the valve sheet 125 can be rotated, such that one part of the valve sheet 125 is opposite the notch 1703 of the sliding sheet. The other part of the valve sheet 125 is opposite one of the third openings 1702 and partially blocks the third opening 1702, without affecting fully opened states of the other third openings 1702.

The multi-way valve provided in Example 3 further includes a valve core seat 70 located in the cavity of the valve housing 20. The valve sheet 125 and the sliding sheet 17 are both located in the valve core seat. 70 An inner wall of the valve core seat 70 is provided with a groove 71 and a stopping protrusion 72. The sliding sheet 17 is located in the groove 71 and abuts against two ends (in the circumferential direction of the multi-way valve) of the stopping protrusion 72. The valve sheet 125 is rotated in the groove 71 and abuts against the two ends (in the circumferential direction of the multi-way valve) of the stopping protrusion 72. Through such an arrangement, a rotation angle of the valve sheet 125 is limited while rotation of the sliding sheet 17 is stopped.

In some embodiments, an inner wall of the valve core seat 70 in the example is further provided with a first stopping block 73, and a bottom of the first valve core 11 is provided with a second stopping block 116. A location at which the first stopping block 73 abuts against the second stopping block 116 can be a starting location of rotation of the first valve core 11.

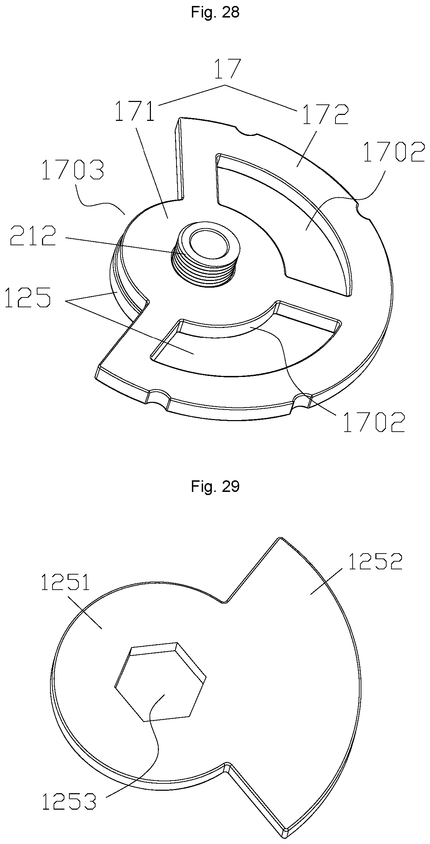

As shown in Fig. 29, the valve sheet 125 includes a first plate body 1251 and a second plate body 1252 connected to each other. The second plate body 1252 is rotated to a location above the second flow ports 212, to adjust flow rates of the second flow ports 212. A shape of the second plate body 1252 matches shapes of the third openings 1702 and shape of the second flow ports 212. The first plate body 1251 is rotatably arranged. The first plate body 1251 drives the second plate body 1252 to rotate. The first plate body 1251 is circular. The second plate body 1252 is sector-shaped and arranged on a periphery of the first plate body 1251. The third openings 1702 and the second flow ports 212 are all of sector-shaped structure.

In some embodiments, the second plate body 1252 of the valve sheet 125 is shaped to cover two third openings 1702. At least one of the third openings 1702 and the second flow ports 212 can be avoided or blocked through rotation of the second plate body 1252, to adjust the flow rates of the second flow ports 212.

In some embodiments, the sliding sheet 17 includes a third plate body 171 and a fourth plate body 172 connected to each other. The third plate body 171 is circular and coaxial with the first plate body 1251. The fourth plate body 172 is sector-shaped. The third plate body 171 is mounted in the valve housing 20. One side of the fourth plate body 172 is provided with two third openings 1702 spaced apart from each other. The other side of the fourth plate body 172 is provided with a notch 1703. Through such an arrangement, the fourth plate body 172 is set to be sector-shaped to be favorably adapted to the second plate body 1252, and the third openings 1702 can be favorably provided.

In the multi-way valve in Example 3, the first valve core shaft 161 and the second valve core shaft 162 are integrally arranged as the valve core shaft 16. The metal sleeve 181 is arranged, in a sleeve manner, on the valve core shaft 16 and connected to the valve core shaft 16. The metal sleeve 181 is inserted into the first plate body 1251 of the valve sheet 125 and in limit-fit with the first plate body 1251. The valve core shaft 16 is rotatably arranged to drive the metal sleeve 181 to rotate. The metal sleeve 181 drives the valve sheet 125 to rotate. Through such an arrangement, the flow rates of the second flow ports 212 can be favorably adjusted.

In some embodiments, the metal sleeve 181 is provided with a limiting segment, and the valve sheet 125 is provided with a limiting port 1253. The limiting segment is adapted to the limiting port 1253 in shape, and the limiting segment is in limit-fit with the limiting port 1253. Through such an arrangement, through limit-fit between the limiting segment and the limiting port 1253, the metal sleeve 181 can drive the valve sheet 125 to rotate. In the example, the section of the limiting segment is a hexagonal surface, and the limiting port 1253 is a hexagonal port.

In some embodiments, the multi-way valve further includes an actuator. The actuator is in drive connection to the first valve core 11. In a case that the actuator drives the first valve core 11 to rotate in a forward direction, the first valve core 11 drives the second valve core 12 to rotate together, and a flow operating condition of the multi-way valve is adjusted through an angle change of the first valve core 11 and an angle change of the second valve core 12. In a case that the actuator drives the first valve core 11 to rotate in a reverse direction, the first valve core 11 is rotated independently, and the flow operating condition of the multi-way valve is adjusted through the angle change of the first valve core 11.

In some embodiments, the actuator drives the first valve core 11 to rotate, to adjust a relative angle between the first valve core 11 and the second valve core 12 and adjust a flow operating condition of the multi-way valve. Specifically, when the rotation angle of the first valve core 11 is required to be adjusted, the first valve core 11 can be directly driven to rotate in a reverse direction to a required angle. When the rotation angle of the second valve core 12 is required to be adjusted but the rotation angle of the first valve core 11 is not required to be adjusted, the first valve core 11 is driven to rotate in a forward direction to drive the second valve core 12 to rotate. After the second valve core 12 is rotated to a required angle, the first valve core 11 is rotated in a reverse direction to return. When the rotation angle of the first valve core 11 and the rotation angle of the second valve core 12 are required to be adjusted at the same time, rotation of the first valve core 11 can be controlled according to an actual angle. Through such an arrangement, a range of the relative rotation between the first valve core 11 and the second valve core 12 is maximized. The situation that relative rotation angle between two valve cores is limited when a single actuator drives the two valve cores to rotate in the prior art is avoided. Applicability of the multi-way valve is improved.

It can be understood that if the forward direction in the example is a clockwise direction, the reverse direction is a counterclockwise direction. Conversely, if the forward direction in the example is a counterclockwise direction, the reverse direction is a clockwise direction. This can be set according to an actual situation.

In some embodiments, in the example, the flow operating condition is formed by a first operating condition and a second operating condition. The first valve core 11 and the second valve core 12 correspondingly form the first operating condition and the second operating condition respectively. The first operating condition includes a plurality of different first operating sub-conditions, and the second operating condition includes a plurality of different second operating sub-conditions. The first operating condition can be any one of the first operating sub-conditions through rotation of the first valve core 11, and the second operating condition can be any one of the second operating sub-conditions through rotation of the second valve core 12. Any one of the first operating sub-conditions and any one of the second operating sub-conditions can form a different flow operating condition.

The valve core component 10 further includes a first transmission structure 13 and a second transmission structure 14 which fit with each other. The first transmission structure 13 and the second transmission structure 14 are arranged on the second valve core 12 and the first valve core 11 respectively. The first transmission structure 13 and the second transmission structure 14 form a ratchet mechanism. Through such an arrangement, the range of the relative rotation between the first valve core 11 and the second valve core 12 can be increased, and the first valve core 11 can favorably drive the second valve core 12.

It can be understood that in other examples not shown, the first transmission structure 13 may be arranged on the first valve core 11, and the second transmission structure 14 may be arranged on the second valve core 12. A corresponding relationship between the first transmission structure 13 and the first valve core 11, and a corresponding relationship between the second transmission structure 14 and the second valve core 12 can be adjusted according to an actual situation.

In some embodiments shown in Fig. 1 to Fig. 23 (that is, in Example 1 and Example 2), the first transmission structure 13 is arranged on one side of the second valve core 12 facing the first valve core 11. The first transmission structure 13 is provided with a ratchet groove 131. The ratchet groove 131 is provided with a guide surface 1311 extending in a circumferential direction of the second valve core 12 and a stop surface 1312 extending in an axial direction of the second valve core 12. Two ends of the guide surface 1311 are spaced apart from each other in the axial direction of the second valve core 12 to form the stop surface 1312. The second transmission structure 14 abuts against the guide surface 1311 and moves in an extending direction of the guide surface 1311. In a case that the actuator drives the first valve core 11 to rotate in the forward direction, the second transmission structure 14 is in push-fit with the stop surface 1312. Through such an arrangement, based on ensuring that the first valve core 11 can be independently rotated in the reverse direction relative to the second valve core 12, it can be ensured that when the first valve core 11 is rotated in the forward direction, the second transmission structure 14 can push against the first transmission structure 13 and drive the second valve core 12 to rotate together.

In some embodiments, the second transmission structure 14 is arranged on one side of the first valve core 11 facing the second valve core 12. The second transmission structure 14 includes a limiting member 141 and an elastic member 142. The limiting member 141 abuts against the guide surface 1311 through the elastic member 142. In a case that the actuator drives the first valve core 11 to rotate in a forward direction, the limiting member 141 is in push-fit with the stop surface 1312. A plurality of ratchet grooves 131 are provided. In a case that the actuator drives the first valve core 11 to rotate in a reverse direction, the limiting member 141 slides through a plurality of guide surfaces 1311 in sequence. A change of the elastic member 142 moving along any one of the guide surfaces 1311 is the same.

In some embodiments, the limiting member 141 is configured to be in contact with the ratchet groove 131. The elastic member 142 is configured to ensure continuity of contact between the limiting member 141 and the ratchet groove 131. The limiting member 141 is arranged in a swingable manner or in an extension and retraction manner under the action of the elastic member 142. Thus, the situation that the limiting member 141 is separated from the ratchet groove 131 in a movement process, resulting in failure of control over the second valve core 12 is avoided. Further, in the example, a plurality of ratchet grooves 131 are provided. That is, a plurality of stop surfaces 1312 are arranged. Through such an arrangement, an angle required for the first valve core 11 to rotate, when the first valve core 11 drives the second valve core 12 to rotate, to a location at which the first valve core pushes against the second valve core 12 can be reduced. Convenience of adjustment can be improved. On the other hand, extension and retraction changes of the elastic member 142 moving along any one of the guide surfaces 1311 are the same. Thus, consistency of the plurality of guide surfaces 1311 can be ensured, and the plurality of guide surfaces 1311 can be favorably processed and arranged.

In some embodiments, a plurality of ratchet grooves 131 are provided. The plurality of ratchet grooves 131 are distributed in the circumferential direction of the second valve core 12. The plurality of guide surfaces 1311 have a same inclination direction and a same inclination angle. A stop surface 1312 is connected between any two adjacent guide surfaces 1311. Two ends of the stop surface 1312 in the axial direction of the second valve core 12 are connected to ends of the guide surfaces 1311 on two sides respectively. A plurality of second transmission structures 14 are arranged. The plurality of second transmission structures 14 are distributed in the circumferential direction of the first valve core 11 and correspond to different ratchet grooves 131.

In some embodiments, the plurality of ratchet grooves 131 are the same, to ensure stability and consistency of guide and stop of the first transmission structure 13 on the second transmission structure 14. Specifically, when the first valve core 11 is rotated in a reverse direction, a movement direction of the second transmission structure 14 is a direction from low to high of the guide surface 1311. With the movement of the second transmission structure 14 from low to high of the guide surface 1311, the elastic member 142 is gradually compressed until the limiting member 141 of the second transmission structure 14 enters a next ratchet groove 131. The elastic member 142 extends to cause the limiting member 141 to push against a low location of the next ratchet groove 131. Then, the limiting member 141 moves from the lower location to a high location of the guide surface 1311 of the ratchet groove 131 again. The first transmission structure 13 repeats the above movement until the first valve core 11 is rotated to a required angle. When the first valve core 11 is rotated in the forward direction, a movement direction of the second transmission structure 14 is a direction from high to low of the guide surface 1311. The limiting member 141 of the second transmission structure 14 moves from high to low of the guide surface 1311 until the limiting member abuts against the stop surface 1312 in front. Since the elastic member 142 provides an elastic force of pressing limiting member 141 against the guide surface 1311, an end of the limiting member 141 abuts against the guide surface 1311, and a side surface of the limiting member 141 abuts against the stop surface 1312. The first valve core 11 and the second transmission structure 14 are continued to be rotated to push the first transmission structure 13 and the second valve core 12 to rotate together. Thus, the first valve core 11 and the second valve core 12 are driven together. Further, a plurality of second transmission structures 14 are arranged, to ensure reliability and stability of fitting between the first transmission structure 13 and the second transmission structure 14. Moreover, a pushing effect of the second transmission structure 14 on the first transmission structure 13 is ensured.

In some embodiments, as shown in Fig. 1 to Fig. 15, Example 1 of the present invention provides a multi-way valve. In the example, the forward direction is a clockwise direction, and the reverse direction is a counterclockwise direction. That is, when the first valve core 11 is rotated in the counterclockwise direction, the second valve core 12 is not rotated. When the first valve core 11 is rotated in the clockwise direction, the first valve core 11 drives the second valve core 12 to rotate. The first transmission structure 13 includes a plurality of limiting blocks 132 arranged at a top of the second valve core 12. The plurality of limiting blocks 132 are distributed in the circumferential direction of the second valve core 12 and connected end to end. The limiting blocks 132 extend in the circumferential direction of the second valve core 12 and have top surfaces inclined relative to a top surface of the second valve core 12. One end of the top surfaces of the limiting blocks 132 extends to the top surface of the second valve core 12. A ratchet groove 131 is formed between any two adjacent limiting blocks 132. Through such an arrangement, the ratchet groove 131 can be favorably processed.

As shown in Fig. 3 to Fig. 6, the second transmission structure 14 includes a limiting member 141 and an elastic member 142. The limiting member 141 includes a pushing block 1411, a fixed block 1412, and a connecting member 1413. The fixed block 1412 is fixedly arranged at a bottom of the first valve core 11. One end of the pushing block 1411 rotatably penetrates the fixed block 1412 through the connecting member 1413. The elastic member 142 is an elastic sheet 1421. The elastic sheet 1421 abuts against the bottom of the first valve core 11 and the pushing block 1411, to limit the other end of the pushing block 1411 in the ratchet groove 131. A plurality of second transmission structures 14 are arranged. The plurality of pushing blocks 1411 fit with the ratchet grooves 131 at different locations respectively.

In some embodiments, the pushing block 1411 is arranged, in a swingable manner, around a connection location between the pushing block and the fixed block 1412, to ensure that the pushing block can swing along the guide surface 131. Moreover, the situation that the first transmission structure 13 and the second transmission structure 14 cannot be rotated relative to each other due to interference between the pushing block 1411 and the guide surface 1311 can be avoided. One end of the pushing block 1411 facing away from the fixed block 1412 is in contact with the ratchet groove 131 under the action of the elastic sheet 1421, to ensure reliability and stability of a fitting connection between the first transmission structure 13 and the second transmission structure 14.

As shown in Fig. 6, the bottom of the first valve core 11 and the pushing block 1411 are provided with mounting grooves 143 for mounting the elastic sheet 1421. The elastic sheet 1421 includes two sheet bodies connected to each other. An included angle is provided between the two sheet bodies. The two sheet bodies have an elastic tendency to rotate away from each other around a connection location. The two sheet bodies are in limit-fit with inner walls of the two mounting grooves 143 respectively.

In some embodiments, the two sheet bodies are connected to each other and have an opening tendency, to ensure that one end of the pushing block 1411 facing away from the fixed block 1412 is pushed into the ratchet groove 131. By providing the mounting groove 143, the two sheet bodies are limited, to avoid the situation that the elastic sheet 1421 moves or even falls off to cause failure of the second transmission structure 14.

It can be understood that the ratchet mechanism composed of the first transmission structure 13 and the second transmission structure 14 is not limited to Example 1. Based on ensuring reliability of a connection and a relative movement between the first valve core 11 and the second valve core 12, other ratchet mechanisms which can perform a same adjustment method can be used.

As shown in Fig. 16 to Fig. 23, Example 2 of the present invention provides a multi-way valve. In the example, the forward direction is a clockwise direction, and the reverse direction is a counterclockwise direction. That is, when the first valve core 11 is rotated in the counterclockwise direction, the second valve core 12 is not rotated. When the first valve core 11 is rotated in the clockwise direction, the first valve core 11 drives the second valve core 12 to rotate. Different from Example 1, in the example, the first transmission structure 13 includes a first limiting plate 133 arranged at a top of the second valve core 12. The first limiting plate 133 is provided with a plurality of ratchet grooves 131 distributed in the circumferential direction of the first limiting plate 133. Through such an arrangement, the ratchet groove 131 can be favorably processed. One end of bottom surfaces of the ratchet grooves 131 extend to a top surface of the first limiting plate 133.

In some embodiments, the second transmission structure 14 provided in Example 2 includes a second limiting plate 145, a limiting member 141, and an elastic member 142. The second limiting plate 145 is arranged at a bottom of the first valve core 11 and is provided with a plurality of limiting grooves 1451 having openings facing the first limiting plate 133. The limiting member 141 includes a limiting post 1414. The elastic member 142 is arranged, in an extension and retraction manner, in the limiting groove 1451, and two ends of the elastic member abut against a top wall of the limiting groove 1451 and a top of the limiting post 1414 respectively. One end of the limiting post 1414 penetrates the limiting groove 1451, and the other end of the limiting post 1414 fits with one of the ratchet grooves 131. A plurality of second transmission structures 14 are arranged. The plurality of limiting posts 1414 fit with different ratchet grooves 131.

In some embodiments, the elastic member 142 is a first spring 1422. One end of the limiting post 1414 movably penetrates the limiting groove 1451, and the other end thereof abuts against one of the ratchet grooves 131. When the first valve core 11 drives the second transmission structure 14 to rotate in a reverse direction, the limiting post 1414 moves along the guide surface 1311 of the ratchet groove 131 from high to low. When moving along the guide surface 1311, the limiting post 1414 moves up and down relative to the second limiting plate 145 and passes through the plurality of ratchet grooves 131 in sequence until the first valve core 11 is rotated to a required angle. When the first valve core 11 drives the second transmission structure 14 to rotate in a forward direction, the limiting post 1414 moves along the guide surface 1311 of the ratchet groove 131 from low to high. When moving along the guide surface 1311, the limiting post 1414 moves up and down relative to the second limiting plate 145 until the limiting post moves to a lowest location of the ratchet groove 131 and abuts against the stop surface 1312 of the ratchet groove 131. Then, the first valve core 11 continues to rotate, to drive the second valve core 12 to rotate together. Through such an arrangement, reliability and stability of a fitting connection between the first transmission structure 13 and the second transmission structure 14 can be ensured.

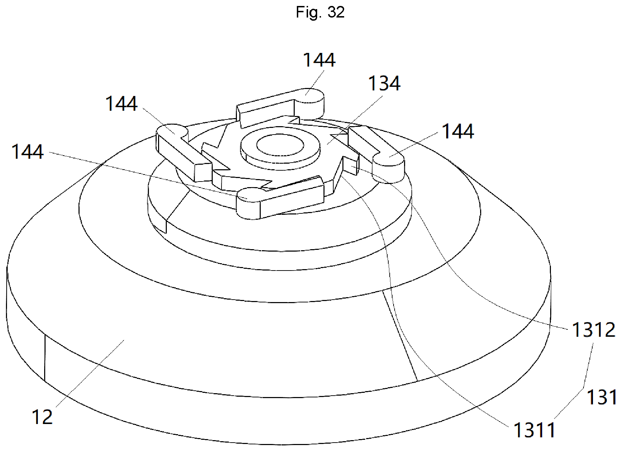

As shown in Fig. 31 and Fig. 32, Example 4 of the present invention provides a multi-way valve. In the example, the forward direction is a counterclockwise direction, and the reverse direction is a clockwise direction. That is, when the first valve core 11 is rotated in the clockwise direction, the second valve core 12 is not rotated. When the first valve core 11 is rotated in the counterclockwise direction, the first valve core 11 drives the second valve core 12 to rotate. Or when the second valve core 12 is rotated in a clockwise direction, the first valve core 11 is not moved. The second valve core 12 is rotated in a counterclockwise direction to drive the first valve core 11 to rotate at the same time. Different from Example 1, the first transmission structure 13 includes a ratchet wheel 134, and the second transmission structure 14 includes a plurality of pawls 144. The plurality of pawls 144 are distributed in the circumferential direction of the first valve core 11 and fit with different ratchet teeth of the ratchet wheel 134.

In some embodiments, the ratchet wheel 134 is fixedly arranged at the top of the second valve core 12. The plurality of pawls 144 are distributed in the circumferential direction of the ratchet wheel 134 and are all arranged, in an elastically swingable manner, at the bottom of the first valve core 11. When the first valve core 11 is rotated in a reverse direction, the plurality of pawls 144 rotate, and swing with changes of contact locations between the pawls and the guide surfaces 1311. When the first valve core 11 is rotated in a forward direction, the plurality of pawls 144 abut against the stop surfaces 1312 of the front ratchet teeth, and push the ratchet wheel 134 and the second valve core 12 to rotate together. Through such an arrangement, based on ensuring reliability of the ratchet mechanism, the first transmission structure 13 and the second transmission structure 14 can be favorably arranged and mounted.

In some embodiments, the second transmission structure 14 provided in Example 4 further includes an adapter assembly. The pawls 144 include adapter blocks and main bodies, which are connected to each other. The adapter blocks are arranged at the bottom of the first valve core 11 through the adapter assembly. One end of the main bodies facing away from the adapter blocks abuts against the ratchet wheel 134. The pawls are rotatably arranged around the adapter assembly.

In some embodiments, a radial size of the adapter block is greater than a radial size of the main body, to ensure structural strength of the pawls 144 when the pawls 144 are arranged at the bottom of the first valve core 11 through the adapter assembly. Specifically, the adapter assemblies may be composed of adapter shafts, adapter bearings, etc. The adapter shafts are fixedly arranged at the bottom of the first valve core 11. One end of the adapter shafts protrudes from the bottom of the first valve core 11 and penetrates the adapter blocks. The adapter blocks are rotatably connected to the adapter shafts through the adapter bearings and in limit-fit with the adapter shafts. Through such an arrangement, the pawls 144 can rotate with the adapter shafts as rotation centers, to ensure reliability of relative movements between the pawls 144 and the guide surfaces 1311. Thus, jamming or interference are avoided. It can be understood that the adapter assemblies include mounting members. The adapter blocks are connected to the adapter shafts through mounting members and limit relative movements between the mounting members and the adapter shafts, to prevent the pawls 144 from falling off. Further, specific structures and arrangements of the adapter assemblies can be adjusted according to an actual situation, and are not limited to the above examples. No example is given herein.

In some embodiments, the second transmission structures 14 further include rebound assemblies. One end of the rebound assemblies is connected to the adapter blocks or the main bodies, and the other end of the rebound assemblies is connected to the bottom of the first valve core 11 or the adapter assemblies. The rebound assemblies are configured to drive the pawls 144 to rotate in a direction close to the ratchet wheel 134 and press the pawls 144 against the ratchet wheel 134.

In some embodiments, through the rebound assembly, it is ensured that the pawls 144 can always be pressed against the ratchet wheel 134, to ensure reliability of fitting between the pawls 144 and the ratchet wheel 134. Specifically, the rebound assemblies in the example may be torsion springs or other structures capable of torsional forces. With the torsion springs as an instance, one end of the torsion springs are connected to the adapter shafts, and the other end of the torsion springs are connected to inner walls of the adapter blocks. When the ratchet wheel 134 is rotated, the pawls 144 swing with the guide surfaces 1311. When the pawls 144 swing to one side facing away from the ratchet wheel 134, the torsion springs are compressed. When the pawls 144 move from one guide surface 1311 to the next guide surface 1311, the pawls 144 swing in a direction close to the ratchet wheel 134 under unfolding elastic forces of the torsion springs and are pressed against the next guide surface 1311. Through the rebound assemblies, reliability and stability of fitting between the ratchet wheel 134 and the pawls 144 are ensured.

It should be noted that terms used herein are merely for describing particular embodiments and are not intended to limit illustrative embodiments of the present invention. As used herein, singular is also intended to include plural unless the context clearly points out singular or plural. In addition, it should be understood that terms "comprise" and/or "include" used in the description indicate the presence of features, steps, operations, devices, assemblies and/or their combinations.

Unless specifically stated otherwise, relative arrangements, numerical expressions, and values of components and steps stated in these examples do not limit the scope of the present invention. Moreover, it should be understood that sizes of various parts shown in the figures are not drawn according to an actual scale for ease of description. Technique, methods and apparatuses known to those of ordinary skill in the related art may not be discussed in detail, but should be considered as part of the description where appropriate. In all instances shown and discussed herein, any specific value should be interpreted as merely illustrative rather than limitative. Thus, other instances of the illustrative examples can have different values. It should be noted that similar numerals and letters denote similar items in the following accompanying drawings. Thus, once an item is defined in one figure, it is not required to be further discussed in the subsequent figures.

In the description of the present disclosure, it should be understood that orientational or locational relationships indicated by orientation words such as "front, back, up, down, left, and right", "transverse, vertical, perpendicular, and horizontal", and "top and bottom" are generally based on orientational or locational relationships shown in the accompanying drawings, and are for the convenience of describing the present disclosure and simplifying the description only. Unless otherwise stated, these orientation words do not indicate or imply that devices or elements indicated thereby must have particular orientations or must be constructed and operated in particular orientations and thus cannot be construed as limiting the scope of protection of the present disclosure. Orientation words "inner and outer" refer to an interior and an exterior relative to an outline of each component.

For ease of description, spatial relative terms such as "over", "above", "on an upper surface", and "on" may be used herein to describe spatial locational relationships of one device or feature with other devices or features shown in the figures. It should be understood that the spatial relative terms are intended to include different orientations in use or operation in addition to the orientations of the devices described in the figures. For instance, if the device in a figure is inverted, the device described as being located "above" or "over" another device or structure would then be positioned "below" or "under" another device or structure. Thus, the illustrative term "above" can include two orientations of "above" and "below." The device can alternatively be positioned in other different ways (being rotated by 90 degrees or being located in other orientations), and the spatial relative description used herein is interpreted accordingly.

In addition, it should be noted that usage of words such as "first" and "second" to define parts is only for the purpose of conveniently distinguishing corresponding parts. Unless otherwise stated, the above words do not have special meanings, and thus cannot be understood as limiting the scope of protection of the present disclosure.

The above examples are merely preferred examples of the present disclosure, and are not used for limiting the present disclosure. A person skilled in the art can make various modifications and changes on the present disclosure. Any modifications, equivalent substitutions, improvements, etc. in the spirit and principles of the present disclosure should fall within the scope of protection of the present disclosure.

## Claims

1. A multi-way valve, comprising a valve housing (20) and a valve core component (10) disposed in a cavity of the valve housing (20), wherein the valve core component (10) comprises a first valve core (11), a second valve core (12) and an elastic support assembly (18) which is disposed between the first valve core (11) and the second valve core (12), the elastic support assembly (18) is configured to support the first valve core (11), and the first valve core (11) is limited between the valve housing (20) and the elastic support assembly (18); and through an elastic force of the elastic support assembly (18), the second valve core (12) is pressed against a bottom wall of the cavity of the valve housing (20).

2. The multi-way valve according to claim 1, wherein the valve core component (10) further comprises a second valve core shaft (162) which is connected with the valve housing (20), the elastic support assembly (18) comprises a metal sleeve (181) and a second spring (182), the metal sleeve (181) is fixedly sleeved on a periphery of the second valve core shaft (162), the second spring (182) is sleeved on the periphery of the second valve core shaft (162), and two ends of the second spring respectively abut against the metal sleeve (181) and a top wall of the second valve core (12); and the first valve core (11) is in stop-fit with one end of the metal sleeve (181) facing away from the second spring (182).

3. The multi-way valve according to claim 2, wherein an end of the second valve core shaft (162) is disposed at a center of the first valve core (11), an other end of the second valve core shaft (162) is disposed at a center of the second valve core (12), the second valve core (12) is rotated around the second valve core shaft (162), and a gap is provided between the metal sleeve (181) and the second valve core shaft (162).

4. The multi-way valve according to claim 2, wherein the metal sleeve (181) is provided with a first segment (1811) and a second segment (1812) which are connected to each other, the second spring (182) abuts against one surface of the first segment (1811), and the other surface of the first segment (1811) is in stop-fit with the first valve core (11); or the second spring (182) abuts against one surface of the first segment (1811) facing away from the second segment (1812), and one surface of the second segment (1812) facing away from the first segment (1811) is in stop-fit with the first valve core (11).

5. The multi-way valve according to claim 2, wherein the valve core component (10) further comprises a pressing sheet (43) and a sealing member (44) which are sleeved on the second valve core shaft (162), the pressing sheet (43) is fixedly connected with the second valve core shaft (162), the second spring (182) is disposed between the pressing sheet (43) and the metal sleeve (181), and the sealing member (44) is disposed between the pressing sheet (43) and the second valve core (12).

6. The multi-way valve according to claim 2, wherein a bottom of the valve housing (20) is provided with a limiting hole (201), the valve core component (10) further comprises a press-fitting member (15), the first valve core (11) is disposed on a side of the second valve core (12) facing away from the limiting hole (201), an end of the second valve core shaft (162) is disposed in the limiting hole (201), and at least part of the press-fitting member (15) is disposed in the limiting hole (201) and in push-fit with the second valve core shaft (162), so as to make the second valve core shaft (162) press-fitted in the limiting hole (201) and limit an upward movement of the second valve core shaft (162) in an axial direction.

7. The multi-way valve according to claim 6, wherein the multi-way valve further comprises a shaft sleeve (30) embedded in the limiting hole (201) through injection molding, an end of the second valve core shaft (162) is disposed in the shaft sleeve (30), and at least part of the press-fitting member (15) is disposed in the shaft sleeve (30) and in limit-fit with the second valve core shaft (162) and the shaft sleeve (30); and the press-fitting member (15) is provided with an external thread, the shaft sleeve (30) is provided with an internal thread, and the press-fitting member (15) is in threaded connection with the shaft sleeve (30).

8. The multi-way valve according to claim 6, wherein the second valve core shaft (162) comprises a shaft body (1621) and a limiting end plate (1622) which are connected to each other, the limiting end plate (1622) is arranged at one end of the shaft body (1621) and located in the limiting hole (201), a radial size of the limiting end plate (1622) is greater than a radial size of the shaft body (1621), and the press-fitting member (15) is arranged, in a sleeve manner, on a periphery of the shaft body (1621) and in push-fit with one side of the limiting end plate (1622) facing away from a bottom surface of the limiting hole (201).

9. The multi-way valve according to claim 1, wherein the valve core component (10) further comprises a press-fitting member (15) and a sliding sheet (17), the sliding sheet (17) is disposed in the valve housing (20), the second valve core (12) is circumferentially rotated on a surface of the sliding sheet (17), the press-fitting member (15) is connected with the valve housing (20), and the sliding sheet (17) is sandwiched between the press-fitting member (15) and the valve housing (20).

10. The multi-way valve according to claim 9, wherein one end of the press-fitting member (15) is provided with a press-fitting protrusion, and the press-fitting protrusion is in push-fit with the sliding sheet (17), to make, during mounting of the press-fitting member (15), the sliding sheet (17) press-fitted at a bottom of the cavity of the valve housing (20).

11. The multi-way valve according to claim 10, wherein the press-fitting protrusion is provided with a first limiting inclined surface (1521), the sliding sheet (17) is provided with a through hole for the press-fitting member (15) to pass through, a radial size of the through hole is gradually decreased in a direction close to the bottom of the valve housing (20), so as to form a second limiting inclined surface (1701) adapted to the first limiting inclined surface (1521), and the first limiting inclined surface (1521) is in push-fit with the second limiting inclined surface (1701).

12. The multi-way valve according to claim 10, wherein the press-fitting member (15) comprises a bolt segment (151) and a press-fitting segment (152), a periphery of the bolt segment (151) is provided with an external thread, a radial size of the press-fitting segment (152) is gradually increased in a direction facing away from the bolt segment (151), and the press-fitting protrusion is formed on the press-fitting segment (152).

13. The multi-way valve according to claim 9, wherein a bottom of the valve housing (20) is further provided with a sealing groove and an opening of the sealing groove facing an interior of the cavity of the valve housing (20), the multi-way valve further comprises a flow path sealing gasket (41) disposed in the sealing groove, and the sliding sheet (17) is disposed on a top surface of the flow path sealing gasket (41).

14. The multi-way valve according to claim 1, wherein
the valve housing (20) is provided with a plurality of first flow ports (211), a plurality of second flow ports (212) and a plurality of first flow cavities (202), and the plurality of first flow cavities (202) are in communication with the plurality of first flow ports (211) in a one-to-one correspondence manner;
the first valve core (11) is provided with a plurality of first flow passages (1101), the first flow passages (1101) are in communication with first flow cavities (202) corresponding to the first flow passages, and communication between the first flow ports (211) is switched through rotation of the first valve core (11);
the second valve core (12) is provided with a plurality of second flow passages (1201), the second flow passages (1201) are in communication with second flow cavities (212) corresponding to the second flow passages, and communication between the second flow ports (212) is switched through rotation of the second valve core (12); and
the second flow passages (1201) are not in communication with the first flow passages (1101).

15. The multi-way valve according to claim 14, wherein a bottom wall of the valve housing (20) is a bottom plate (21), the plurality of first flow ports (211) are disposed at an edge of the bottom plate (21), the plurality of the second flow ports (212) are disposed in a middle of the bottom plate (21), side walls in a circumferential direction of the valve housing (20) comprise an outer side wall (22) and an inner side wall (23), and the plurality of first flow cavities (202) are formed between the outer side wall (22) and the inner side wall (23).

16. The multi-way valve according to claim 15, wherein the second valve core (12) is located in the middle of the bottom plate (21), one end of the first valve core (11) in an axis direction of the multi-way valve is located at a top of the second valve core (12), and the other end of the first valve core (11) in the axis direction of the multi-way valve abuts against a top of the valve housing (20); the first flow passage (1101) and two first flow cavities (202) and two first flow ports (211) which correspond to the first flow passage constitute a first flow path (501), and the second flow passage (1201) and two second flow ports (212) corresponding to the second flow passage constitute a second flow path (502); inlets and outlets of the first flow passages (1101) are located in a circumferential direction of the first valve core (11), and the inner side wall (23) is provided with openings opposite the inlets and the outlets in the circumferential direction of the first valve core (11); and inlets and outlets of the second flow passages (1201) are located at one end of the second valve core (12) facing the bottom plate (21).

17. The multi-way valve according to claim 1, wherein a cavity region delimited by the first valve core (11), the second valve core (12), and the valve housing (20) form a back pressure cavity (503), fluid in the second valve core (12) is not in communication with fluid in the back pressure cavity (503), and fluid in the first valve core (11) is in communication with the fluid in the back pressure cavity (503).

18. The multi-way valve according to claim 17, further comprising a valve core sealing gasket (42) arranged around the first valve core (11), wherein the valve core sealing gasket (42) is arranged on a side wall of the cavity of the valve housing (20) and in seal-fit with a periphery of the first valve core (11), the valve core sealing gasket (42) is provided with a first opening (421) penetrating a side wall of the valve core sealing gasket (42) in an axial direction of the first valve core (11), and the fluid in the first valve core (11) is in communication with the fluid in the back pressure cavity (503) through the first opening (421) on the side wall of the valve core sealing gasket (42).

19. The multi-way valve according to claim 18, further comprising a supporting seat (60), wherein the supporting seat (60) is disposed on the bottom wall of the cavity of the valve housing (20), a part of the supporting seat is parallel to the side wall of the cavity of the valve housing (20), the supporting seat (60) is sleeved on a periphery of the second valve core (12) and supports the valve core sealing gasket (42), and a cavity region delimited by the supporting seat (60), the first valve core (11) and the second valve core (12) forms the back pressure cavity (503).

20. The multi-way valve according to claim 18, wherein the supporting seat (60) is provided with a limiting protrusion (61) and a first returning protrusion (62), the limiting protrusion (61) fits with the first opening (421) to limit relative rotation between the supporting seat (60) and the valve core sealing gasket (42), a bottom of the first valve core (11) is provided with a second returning protrusion, and the first returning protrusion (62) is in stop-fit with the second returning protrusion in a circumferential direction.

21. The multi-way valve according to claim 1, wherein the valve housing (20) is provided with a plurality of first flow ports (211) and a plurality of second flow ports (212), the first valve core (11) is provided with a plurality of first flow passages (1101), and the first valve core (11) is rotatably disposed in the cavity of the valve housing (20), so as to switch communication between the first flow ports (211); and the second valve core (12) is rotatably disposed in the cavity of the valve housing (20), to fully open, fully close, or partially close a second flow port (212) opposite to the second valve core (12).

22. The multi-way valve according to claim 21, wherein the second valve core (12) comprises a valve sheet (125), the multi-way valve further comprises a sliding sheet (17), the sliding sheet (17) is disposed in the cavity of the valve housing (20), the sliding sheet (17) is provided with third openings (1702), and the third openings (1702) correspond to the second flow ports (212) in a one-to-one correspondence; the valve sheet (125) is rotated on a surface of the sliding sheet (17) and in seal-contact with the sliding sheet (17), so as to cause the valve sheet (125) to fully open, fully close, or partially close a third opening (1702) corresponding to the valve sheet; and the sliding sheet (17) is further provided with a notch (1703), and the notch (1703) directly faces a bottom wall of the valve housing (20).

23. The multi-way valve according to claim 22, further comprising a valve core seat (70) disposed in the cavity of the valve housing (20), the valve sheet (125) and the sliding sheet (17) are disposed in the valve core seat (70), an inner wall of the valve core seat (70) is provided with a groove (71) and a stopping protrusion (72), and the sliding sheet (17) is disposed in the groove (71) and abuts against two ends of the stopping protrusion (72); and the valve sheet (125) is rotated in the groove (71) and abuts against the two ends of the stopping protrusion (72).

24. The multi-way valve according to claim 22, wherein the valve core component (10) further comprises a second valve core shaft (162) connected to the valve housing (20), the multi-way valve further comprises a metal sleeve (181), the metal sleeve (181) is arranged, in a sleeve manner, on the second valve core shaft (162) and connected to the second valve core shaft (162), the metal sleeve (181) is inserted into the valve sheet (125) and in limit-fit with the valve sheet (125), the second valve core shaft (162) is rotatably arranged to drive the metal sleeve (181) to rotate, and the metal sleeve (181) drives the valve sheet (125) to rotate.

25. The multi-way valve according to claim 1, further comprising an actuator, wherein the actuator is in drive connection with the first valve core (11);
in a case that the actuator drives the first valve core (11) to rotate in a forward direction, the first valve core (11) drives the second valve core (12) to rotate together, and a flow operating condition of the multi-way valve is adjusted through an angle change of the first valve core (11) and an angle change of the second valve core (12); and
in a case that the actuator drives the first valve core (11) to rotate in a reverse direction, the first valve core (11) is rotated independently, and the flow operating condition of the multi-way valve is adjusted through an angle change of the first valve core (11).

26. The multi-way valve according to claim 25, wherein the valve core component (10) further comprises a first transmission structure (13) and a second transmission structure (14) which fit with each other, the first transmission structure (13) and the second transmission structure (14) are disposed on the second valve core (12) and the first valve core (11) respectively, one of the first transmission structure (13) and the second transmission structure (14) comprises a ratchet wheel (134), an other one comprises a plurality of pawls (144), the plurality of pawls (144) are distributed in a circumferential direction of the first valve core (11) and fit with different ratchet teeth of the ratchet wheel (134), and the first transmission structure (13) and the second transmission structure (14) constitute a ratchet mechanism.

27. The multi-way valve according to claim 26, wherein the first transmission structure (13) is arranged on one side of the second valve core (12) facing the first valve core (11), the first transmission structure (13) is provided with a ratchet groove (131), the ratchet groove (131) is provided with a guide surface (1311) extending in a circumferential direction of the second valve core (12) and a stop surface (1312) extending in an axial direction of the second valve core (12), two ends of the guide surface (1311) are spaced apart from each other in the axial direction of the second valve core (12) to form the stop surface (1312), and the second transmission structure (14) abuts against the guide surface (1311) and moves in an extending direction of the guide surface (1311); and in a case that the actuator drives the first valve core (11) to rotate in the forward direction, the second transmission structure (14) is in push-fit with the stop surface (1312).

28. The multi-way valve according to claim 27, wherein a plurality of ratchet grooves (131) are provided, the plurality of ratchet grooves (131) are distributed in the circumferential direction of the second valve core (12), a plurality of guide surfaces (1311) have a same inclination direction and a same inclination angle, one stop surface (1312) is connected between any two adjacent guide surfaces (1311), and two ends of the stop surface (1312) in the axial direction of the second valve core (12) are connected with ends of the guide surfaces (1311) on two sides respectively; and a plurality of second transmission structures (14) are disposed, and the plurality of second transmission structures (14) are distributed in the circumferential direction of the first valve core (11) and correspond to the different ratchet grooves (131).

29. The multi-way valve according to claim 27, wherein the second transmission structure (14) comprises a limiting member (141) and an elastic member (142), the limiting member (141) comprises a pushing block (1411), a fixed block (1412) and a connecting member (1413), the fixed block (1412) is fixedly disposed at a bottom of the first valve core (11), one end of the pushing block (1411) rotatably penetrates the fixed block (1412) through the connecting member (1413), the elastic member (142) is an elastic sheet (1421), the elastic sheet (1421) abuts against the bottom of the first valve core (11) and the pushing block (1411), so as to limit an other end of the pushing block (1411) in the ratchet groove (131), a plurality of second transmission structures (14) are disposed, and the plurality of pushing blocks (1411) fit with the ratchet grooves (131) at different locations respectively.

30. The multi-way valve according to claim 29, wherein the bottom of the first valve core (11) and the pushing block (1411) are provided with mounting grooves (143) for mounting the elastic sheet (1421), the elastic sheet (1421) comprise two sheet bodies connected to each other, an included angle is provided between the two sheet bodies, the two sheet bodies have an elastic tendency to rotate away from each other around a connection location, and the two sheet bodies are in limit-fit with inner walls of the two mounting grooves (143) respectively.
